# FASCICULE DE BREVET EUROPEEN

(11) **EP 4 399 850 B1**
(45) Date de publication et mention de la délivrance du brevet: **06.08.2025**
(21) Numéro de dépôt: 22773523.0
(22) Date de dépôt: 07.09.2022
(51) Int. Cl.: H04L 43/18, H04L 43/02, H04L 43/04

(54) **PROCÉDÉ ET SYSTÈME DE SURVEILLANCE ET GESTION DU TRAFIC DE DONNÉES**
VERFAHREN UND SYSTEM ZUR ÜBERWACHUNG UND VERWALTUNG VON DATENVERKEHR
METHOD AND SYSTEM FOR MONITORING AND MANAGING DATA TRAFFIC

(30) Priorité: 07.09.2021 FR 2109380
(43) Date de publication de la demande: 17.07.2024
(73) Titulaire: Nano Corp., 75010 PARIS (FR)
(72) Inventeur: COURVOISIER, François, 75010 PARIS (FR); LE PICARD, Frédéric, 75010 PARIS (FR)
(74) Mandataire: Boncea, Oana-Laura
(86) Numéro de dépôt international: PCT/EP2022/074918
(87) Numéro de publication internationale: WO 2023/036847

(56) Documents cités:
- US-A1- 2016 112 287
- US-A1- 2021 385 138
- SIKOS LESLIE F: "Packet analysis for network forensics: A comprehensive survey", FORENSIC SCIENCE INTERNATIONAL: DIGITAL INVESTIGATION, ELSEVIER, AMSTERDAM, NL, vol. 32, 20 February 2020 (2020-02-20), XP086115175, ISSN: 2666-2817, [retrieved on 20200220], DOI: 10.1016/J.FSIDI.2019.200892

## Description

### ARRIÈRE-PLAN

Les appareils électroniques et les appareils informatiques sont utilisés quotidiennement par des millions d'utilisateurs dans le monde entier à des fins de communication et de partage d'informations. La communication entre ces appareils est généralement facilitée par un réseau de communication, tel qu'Internet. La communication entre les appareils repose généralement sur le modèle bien connu d'interconnexion des systèmes ouverts (OSI) à sept couches, qui définit les fonctions des différentes couches de protocole sans spécifier les protocoles de couche eux-mêmes. Les sept couches du modèle OSI, parfois appelées ici couche 7 à couche 1, sont respectivement les couches application, présentation, session, transport, réseau, liaison de données et physique.

### BRÈVE DESCRIPTION DES DESSINS

La figure 1 illustre un environnement de communication mettant en œuvre un système d'analyse de paquets de données, selon un exemple de la présente invention ;
La figure 2 illustre le schéma du système, selon un exemple de la présente invention ;
La figure 3 illustre un autre schéma du système, selon un exemple de la présente invention ;
La figure 4 illustre la mise en œuvre du système conforme à l'invention,
La figure 5 illustre côté matériel une représentation du système conforme à l'invention ;
La figure 6 illustre une méthode d'analyse du trafic de données conforme à l'invention,
La figure 7 illustre de manière détaillée le procédé de surveillance et de gestion du trafic de données conforme à l'invention,
La figure 8 illustre les étapes de gestion des empreintes numériques conforme à l'invention ;
La figure 9 illustre un cas d'usage du procédé conforme à l'invention,
La figure 10 illustre schématiquement l'étape de vidage et d'enregistrement du procédé conforme à l'invention, et
La figure 11 illustre une vue combinée de mise en œuvre du déclencheur du procédé dans le système conforme à l'invention.

### DESCRIPTION DÉTAILLÉE

Les développements technologiques dans les réseaux de communication ont entraîné la connexion de plus en plus d'appareils informatiques les uns aux autres, entraînant ainsi une augmentation du trafic réseau. Pour prendre en charge les capacités toujours croissantes des périphériques informatiques, les capacités réseau sont également constamment augmentées. Les vitesses améliorées fournies par les réseaux ont actuellement dépassé les capacités de supervision du réseau et de gestion du trafic.

Les équipements connus de supervision de réseau et de gestion du trafic, tels que les sondes réseau, sont des dispositifs matériels spécialisés conçus pour surveiller un flux de données reçues via un réseau de communication. Avec les changements dans les capacités du réseau entraînant une augmentation du trafic de données et une augmentation des capacités des périphériques informatiques, les sondes réseau connues échouent non seulement à fournir des services adéquats de surveillance des données et de gestion du trafic, mais échouent également à fournir d'autres capacités améliorées indispensables, telles que la visualisation du trafic de données, la surveillance et la maintenance d'une qualité de service minimale (QoS) et la sécurité contre les cybermenaces.

Par conséquent, chaque fois que les capacités du réseau changent, une augmentation de l'afflux de trafic de données et/ou que toute nouvelle mesure de surveillance et de supervision de flux de trafic de données est identifiée, les sondes réseau connues doivent être repensées pour modifier leurs capacités de traitement afin de gérer l'afflux accru et accru de trafic de données et permettre l'enregistrement des données réseau d'intérêt aussi appelé capture de paquet (packet capture en anglais).

On connait des technologies tel que Tcpdump, technologie la plus employée aujourd'hui pour capturer et enregistrer le trafic réseau.

Néanmoins, la technologie Tcpdump ne parvient pas à capturer tous les paquets reçus lorsque le débit est trop important, provoquant ainsi une perte substantielle d'informations. Les flux enregistrés s'en trouvent corrompus par ce qu'on pourrait appeler des "moité de flux" ou des « demi-flux. Ces demi-flux sont des flux qui ont commencé à être reçus par le système avant le début de l'enregistrement ou qui se termineront après la fin de l'enregistrement, la corruption pouvant également se produire si l'enregistrement se termine tant que le la réception du flux réseau n'est pas terminé.

La technologie Tcpdump présente en outre l'inconvénient de ne pouvoir être utilisée sur des débits qui dépassent les 500Mb/s et ne permet pas de filtrer les enregistrements de paquets de données sur la base de plus de cinq tuples (adresse IP source/un numéro de port, une adresse IP/un numéro de port de destination et le protocole utilisé).

On connait aussi des technologies de type FPGA, disposant de filtres très performant, permettant de filtrer les enregistrements de paquets de données sur la base de 5-tuples +ou du 7-tuples.

Le FPGA présente le désavantage de ne pouvoir filtrer précisément les paquets de données lorsque le nombre et la diversité des protocoles à classifier est trop complexe (protocoles multiplexés, enchaînements protocolaires complexes, protocoles tunnelés), les solutions à base de FPGA auront alors tendance à ne pas classifier les protocoles qui ne s'annoncent pas, et augmente l'imprécision d'enregistrement tout en provoquant une perte de visibilité.

Le FPGA ne permet d'établir une identification et classification pertinente des protocoles au-delà de la couche 4 du modèle OSI. L'application du FPGA est donc inadapté sur les couches hautes et sur les protocoles ne s'annonçant pas, il devient alors difficile de créer certains filtres complexes utilisant des métadonnées associées à des protocoles de couches supérieures à 4, ou ne s'annonçant pas.

En outre, le manque de mémoire sur les cartes FPGA ne permettra pas d'enregistrer les premiers paquets d'une chaîne de protocoles d'une session lors d'un déclenchement tardif de l'enregistrement, ayant pour résultat des flux corrompus.

Enfin, l'incapacité des technologies FPGA à pouvoir procéder à une analyse profonde des paquets au-dessus de la couche 5 (applicatif) implique également une capacité de filtrage tronquée ne permettant pas d'appliquer des filtres d'enregistrement sur tous les protocoles de bas niveau (uniquement les quelques protocoles qu'un FPGA est en mesure d'implémenter), et sur les protocoles au-dessus de la couche 5.

En outre, afin de filtrer précisément la nature des paquets réseau à enregistrer, il est nécessaire d'analyser le trafic en temps réel avec une sonde d'analyse. Or, les sondes peuvent également être confrontées à des problématiques de performances qui pourront potentiellement affecter négativement la qualité des enregistrements effectuées.

Les paquets reçus peuvent être défaussés par de nombreux composants matériels ou logiciels, dès lors qu'une surconsommation de ressource intervient. Cela peut se produire depuis la carte réseau, qui reçoit les paquets et ne peut pas les diffuser au noyau, ou bien plus tard, quelque part dans le noyau ou dans le logiciel de détection en lui-même.

Une carte réseau peut saturer sa file d'attente, si elle n'arrive pas à effectuer les écritures DMA (Accès direct à la mémoire ou Direct Memory Access en anglais) aussi rapidement que les paquets arrivent depuis le réseau. Outre de possibles lenteurs matérielles sur les bus de communication eux-mêmes, la cause principale de lenteur est le filtrage des accès mémoire par l'IOMMU (I/O Memory Management Unit) qui agit comme gestionnaire des écritures DMA, apte à limiter les plages mémoires sur lesquelles les périphériques d'un serveur sont en mesure d'écrire, à l'instar d'un pare-feu limitant les accès à un réseau. Sa fonction est cruciale pour la sécurité des serveurs, mais totalement contre-productive si elle résulte en l'incapacité à remplir son rôle pour une sonde d'analyse.

L'architecture logicielle des moteurs d'analyse peut également influencer les performances en cas de mauvaise répartition des paquets reçus entre les différents processus en charge de leur traitement. La perte de paquets survient lorsqu'un processeur ou CPU est saturé/noyé sous les traitements qu'un processus d'analyse doit entreprendre. Ce cas de figure se manifeste très facilement lorsque la répartition des paquets reçus n'est pas aléatoire, mais tend à concentrer sur le même processus d'analyse tous les paquets relatifs à un même flux (ex. : sessions TCP). Cette répartition par flux est la plus commune et privilégiée, car elle permet de limiter les accès aux ressources partagées et d'augmenter la localité des accès mémoire.

L'inconvénient que présente cette méthode est qu'elle ne répartit pas correctement le trafic incluant des tunnels (IPsec, GRE, L2TP, TLS...).

En effet, à moins que le programme en charge de la répartition ne fasse de l'inspection profonde (DPI) du trafic, l'intégralité des paquets d'un tunnel sera analysée par un même processus d'analyse, et si ce tunnel est très actif, le processus d'analyse sera facilement débordé, et des paquets commenceront à être perdus.

Le document US 2021/385138 A1 (WATSON JOHN [US] ET AL), 9 décembre 2021, porte sur le monitorage des réseaux. Le document divulgue une solution basée sur deux mémoires, une temporelle où les paquets emmagasinés sont régulièrement effacés, sauf lorsque qu'ils sont marqués comme à sauvegarder et, dans ce cas, ils sont relocalisés dans un mémoire permanente (de longue durée).

L'invention remédie à ces inconvénients et améliore la situation.

La présente invention porte sur le traitement d'un flux de données comprenant des lots de paquets définis chacun par une chaine de protocoles de communication associée à au moins une sessior L'invention est définie par les revendications indépendantes . Le revendications dépendantes présentent des réalisations avantageuses de l'invention.

Selon une définition générale de l'invention, le procédé comprend les étapes suivantes :
- recevoir une pluralité de lots de paquets de données dans un délai prédéfini via un canal de communication et stocker lesdits lots de paquets dans une mémoire temporaire ;
- effectuer, pour chaque lot de paquets de données, une analyse de protocoles permettant d'identifier les protocoles de communication de la chaine de protocoles, et valider au moins une session associée à la chaine de protocoles lorsque l'identification de la chaîne de protocoles est complète ;
- calculer au moins une empreinte numérique de session associée à une chaîne de protocoles identifiée dont la session est validée lors de l'étape de validation, et
- enregistrer là ou lesdites empreintes numériques de session calculées dans au moins une table de hash, et sauvegarder une liste des métadonnées associées aux protocoles identifiés de la chaine de protocoles de la session validée dans une base de données de connaissance ;
- générer au moins un déclencheur basé sur les résultats d'analyse de protocoles, dans lequel l'activation du déclencheur est indicative de la correspondance entre au moins une règle d'identification de métadonnées cibles, et les métadonnées associées aux protocoles identifiés dont la liste est enregistrée dans la base de données de connaissance ;
- analyser les métadonnées associées aux protocoles identifiés des paquets de données de la session validée, stockés dans les moyens de mémoire temporaire en fonction de la liste enregistrée des métadonnées associées aux protocoles identifiés dans la base de données de connaissance, et vérifier si les métadonnées associées aux protocoles identifiés sont en accord avec la règle d'identification de métadonnées cibles du déclencheur ;
- en cas d'accord avec la règle d'identification de métadonnées cibles, activer le déclencheur et attribuer à au moins une empreinte numérique de session de la session validée un statut de sauvegarde ; et
- vider la mémoire temporaire de chaque lot de paquets de données dont l'empreinte numérique de session est dépourvue d'un statut de sauvegarde, et enregistrer sur une mémoire de stockage pour un traitement ultérieur, l'ensemble des paquets de données dont au moins une empreinte numérique de session associée est pourvue d'un statut de sauvegarde.

Le Demandeur a observé que le procédé selon l'invention permet de répondre à une problématique bien particulière de déclenchement d'un enregistrement. En effet, une gestion de la mémoire selon le procédé conforme à l'invention permet l'identification et l'enregistrement de paquets appartenant à la même session mais dont l'identification est retardée, notamment sur les protocoles nécessitant des paquets d'identification particulier.

Avantageusement, le procédé selon l'invention permet une gestion de la mémoire de travail optimisée et permettant en outre une sélection précise de l'objet de l'enregistrement, et de cibler efficacement les sessions intriquées dans des chaines de protocoles tunnelés, ou multiplexées et ainsi ne cibler et enregistrer que la session d'intérêt sans données parasites pouvant être attribuées à d'autres sessions du ou des mêmes paquets de données.

Enfin, le procédé selon l'invention permet l'enregistrement de sessions ciblées sans perte d'information ou de visibilité, en s'écartant d'une approche de type 5-tuples, pour une approche de type n-tuples permettant avantageusement de filtrer les sessions à enregistrer sur n'importe quel ensemble de métadonnées extraites.

Selon un mode de réalisation, l'étape d'activation du déclencheur comprend une sous-étape de mise à jour de la table de hash enregistrée à la suite de l'étape d'enregistrement d'au moins une empreinte numérique de session, par attribution d'un statut de sauvegarde à au moins une empreinte numérique de session.

En pratique, l'étape de vidage de la mémoire temporaire comprend une sous-étape de consultation de la table de hash pour vérifier si au moins une des empreintes numériques de session associées aux paquets de données sujet au vidage est pourvue d'un statut de sauvegarde.

En outre, l'étape d'analyse des métadonnées associées au protocoles identifiés des paquets de données de la session validée, comprend une sous-étape supplémentaire d'analyse de métadonnées associées au contenu attaché MP de la chaîne de protocole de la session validée, mise en œuvre si au moins une règle d'identification de métadonnées cibles du déclencheur comprend des métadonnées cibles en relation avec le contenu attaché.

En pratique, le déclencheur est apte à traiter et appliquer une liste dynamique de règles d'identification de métadonnées cibles.

Selon un mode de réalisation de l'invention, les métadonnées cibles des règles d'identification du déclencheur appartiennent au groupe formé par métadonnées natives, métadonnées calculées à partie de formules mathématiques choisies.

A titre d'exemple non limitatif, les métadonnées cibles sont représentatives de paramètres réseau choisis appartenant au groupe formé par IP destinataire, IP source, Port destinataire, Port Source, protocole, adresse IP, port, paramètres de qualité de service QoS, Tag de réseau, Volume de la session, taille des paquets, nombre de répétition (retry en anglais), version, type et version de l'algorithme de chiffrement, type de chiffrement, CERT (Computer Emergency Response Team en anglais) du certificat , valeur du SNI (indication du nom du serveur ou Server Name Indication en anglais), Taille des paquets, IP retournée, drapeau d'erreurs (flag error en anglais), nom de domaine, version du client, version du serveur, version d'algorithme de chiffrement, algorithme de compression, horodatage, Version d'IP, nom d'hébergeur (hostname en anglais), durée de bail (lease-time en anglais), URL, agent d'utilisateur, nombre d'octet du contenu attaché, type de contenu, code d'état, entête de cookie, nom du client, service de la requête, valeur du code d'erreur, type de requête, valeur du protocole, horodatage de réponse, niveau de privilège, type et langue du clavier, identification du produit, taille d'écran, ou toute autres métadonnées spécifiques analogues extraites des protocoles dans un ou plusieurs paquets de données de la session validée, métadonnées spécifiques analogues extraites du contenu attaché à un ou plusieurs paquets de données de la session validée.

En pratique, l'exécution de l'étape d'analyse de protocoles, et l'exécution de l'étape d'analyse des métadonnées des paquets de données de la session validée, se font sur des paquets de données de la couche 2 à la couche 7 du modèle OSI.

Lors du traitement de l'ensemble des paquets de données, les paquets de données mis à jour peuvent être soumis à nouveau au moteur d'analyse de protocole. La répétition de l'analyse de protocoles peut permettre de déterminer si le traitement de l'ensemble des paquets de données a effectivement traité la survenance de l'événement. Si l'événement est résolu, les paquets de données mis à jour peuvent être libérés pour être mis à la disposition du destinataire prévu. Toutefois, s'il est identifié qu'un autre événement s'est produit pendant l'analyse des paquets de données mis à jour, un autre déclencheur peut être généré et les paquets de données mis à jour peuvent être traités ultérieurement pour traiter l'occurrence de l'événement.

Par conséquent, le stockage de l'ensemble des paquets de données pour lesquels un événement s'est produit, lors de la génération du déclencheur, facilite la surveillance et la visualisation efficaces du trafic de données dans un réseau.

En outre, le traitement de l'ensemble de paquets de données, tel que le remplacement par un ensemble de paquets de données corrigés ou la modification de l'ensemble de paquets de données, permet de traiter la cause de l'occurrence de l'événement. Ainsi, les anomalies ou les dysfonctionnements dans le trafic de données peuvent être identifiés et traités en temps opportun. En outre, les paquets de données peuvent être analysés pour détecter de manière préventive les risques de sécurité et répondre aux préoccupations connexes.

L'invention a également pour objet un système de traitement d'un flux de données comprenant des lots de paquets définis chacun par une chaine de protocoles de communication rattaché à au moins une session.

Selon une autre définition générale de l'invention, le système selon l'invention comprend :
- des moyens d'interface réseau configurés pour recevoir un flux de données en provenance d'un canal de communication ;
- un processeur comprenant au moins un cœur de traitement pour traiter un nombre prédéterminé de paquets de données par minute ppm ;
- une mémoire temporaire, couplée au processeur, et apte à mettre en mémoire une pluralité de lots de paquets de données en provenance des moyens d'interface réseau ;
- un moteur d'analyse de protocoles exécutable sur au moins un cœur de traitement, dans lequel le moteur d'analyse de protocoles est apte à :
   recevoir une pluralité de lots de paquets de données via un canal de communication;
   effectuer, pour chaque lot de paquets de données, une analyse de protocoles permettant d'identifier les protocoles de communication de la chaine de protocoles, et valider au moins une session associée ;
   calculer au moins une empreinte numérique de session associé à une chaîne de protocole identifiée dont la session est validée, et
   enregistrer l'empreinte numérique de session calculée dans au moins une table de hash, et sauvegarder une liste des métadonnées associées aux protocoles identifiés de la chaine de protocoles de la session validée dans une base de données de connaissance ;
- un moteur de surveillance exécutable sur au moins un cœur de traitement, dans lequel le moteur de surveillance est apte à :
   générer au moins un déclencheur basé sur les résultats d'analyse de protocoles, dans lequel l'activation du déclencheur est indicative de la correspondance entre au moins une règle d'identification de métadonnées cibles, et la liste des métadonnées associées aux protocoles identifiés de la chaine de protocoles de la session validée;
   analyser les métadonnées des paquets de données de la session validée, stockés dans les moyens de mémoire temporaire en fonction de la liste enregistrée des métadonnées associées aux protocoles identifiés dans la base de données de connaissance, et vérifier si les métadonnées associées aux protocoles identifiés sont en accord avec la règle d'identification de métadonnées cibles du déclencheur ;
   en cas d'accord avec la règle d'identification de métadonnées cibles, activer le déclencheur et attribuer à au moins une empreinte numérique de session de la session validée un statut de sauvegarde ; et
   mettre en œuvre le vidage des moyens de mémoire temporaire pour chaque lot de paquets de données dont la ou les empreintes numériques de session sont dépourvues d'un statut de sauvegarde ; et
- une mémoire de stockage couplée au processeur apte à enregistrer pour un traitement ultérieur, l'ensemble des paquets de données dont l'empreinte numérique de session associée est pourvue d'un statut de sauvegarde.

Selon un mode de réalisation de l'invention, le moteur de surveillance est configuré pour mettre à jour la table de hash enregistrée à la suite de l'étape d'enregistrement d'au moins une empreinte numérique de session, par attribution d'un statut de sauvegarde à au moins une empreinte numérique de session en cas d'activation du déclencheur.

En outre, le moteur de surveillance selon l'invention est configuré pour consulter la table de hash, et vérifier si la ou les empreintes numériques de session associées aux paquets de données dont la session est validée, sont pourvues d'un statut de sauvegarde.

Selon un mode particulier de réalisation de l'invention, le moteur de surveillance est configuré pour analyser des métadonnées associées au contenu attaché de la chaîne de protocole de la session validée lors de l'analyse des métadonnées associées aux protocoles identifiés des paquets de données de la session validée, si au moins une règle d'identification de métadonnées cibles du déclencheur comprend des métadonnées cibles en relation avec le contenu attaché.

En pratique, les moyens de mémoire temporaire sont vidés progressivement lorsque l'utilisation de la mémoire vive associée est comprise entre 95% à 98%.

A titre d'exemple non limitatif, le vidage des moyens de mémoire temporaire est effectué chronologiquement par suppression des paquets de données les plus anciens à un rythme de vidage choisi.

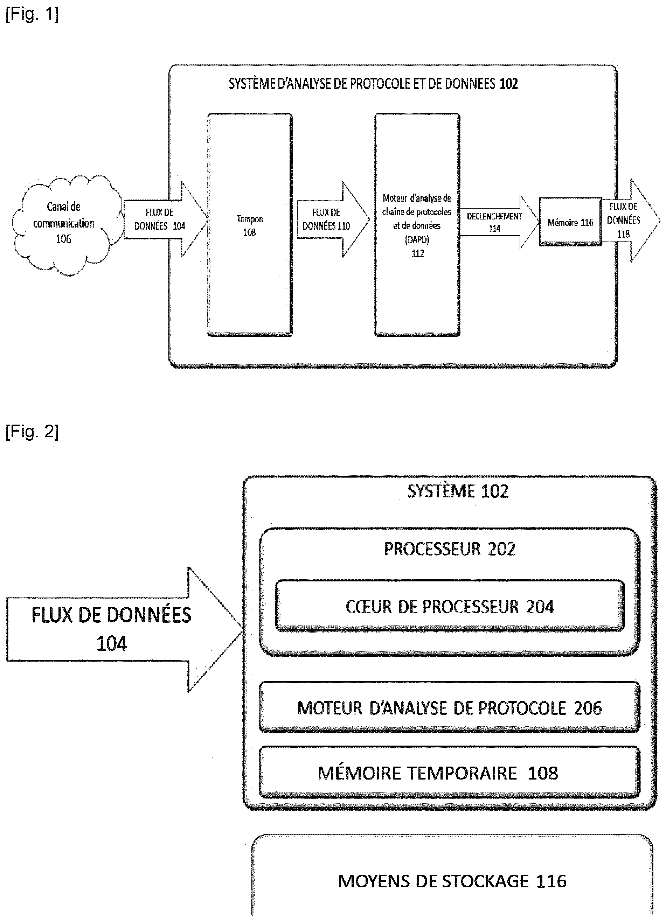

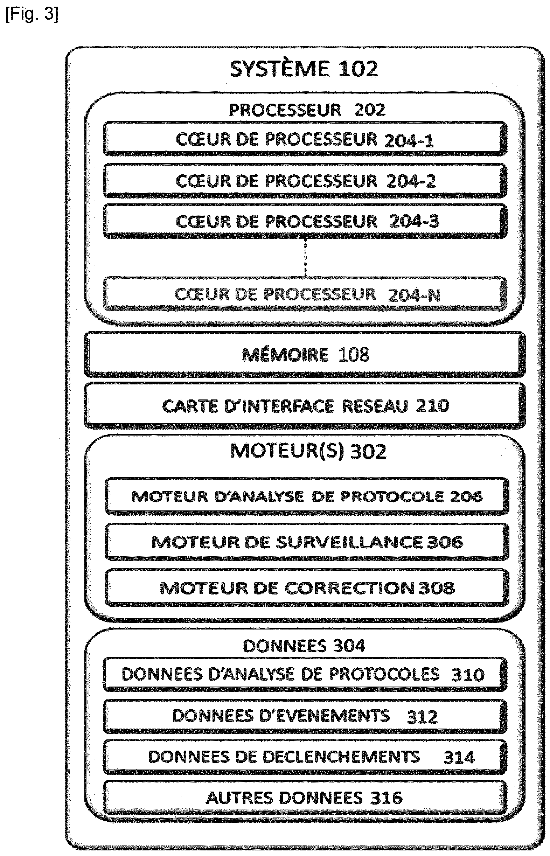

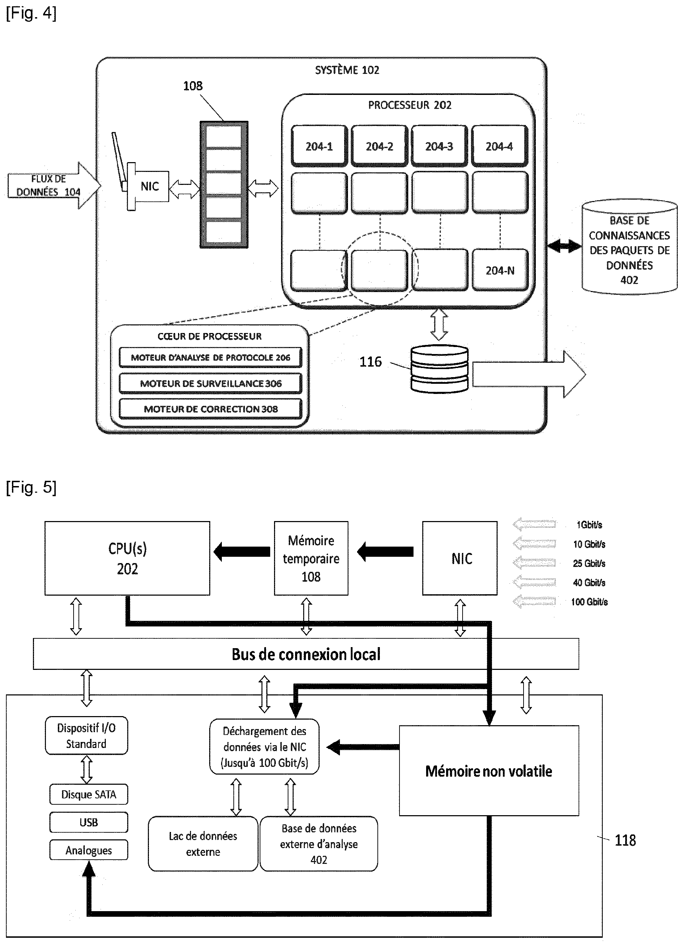

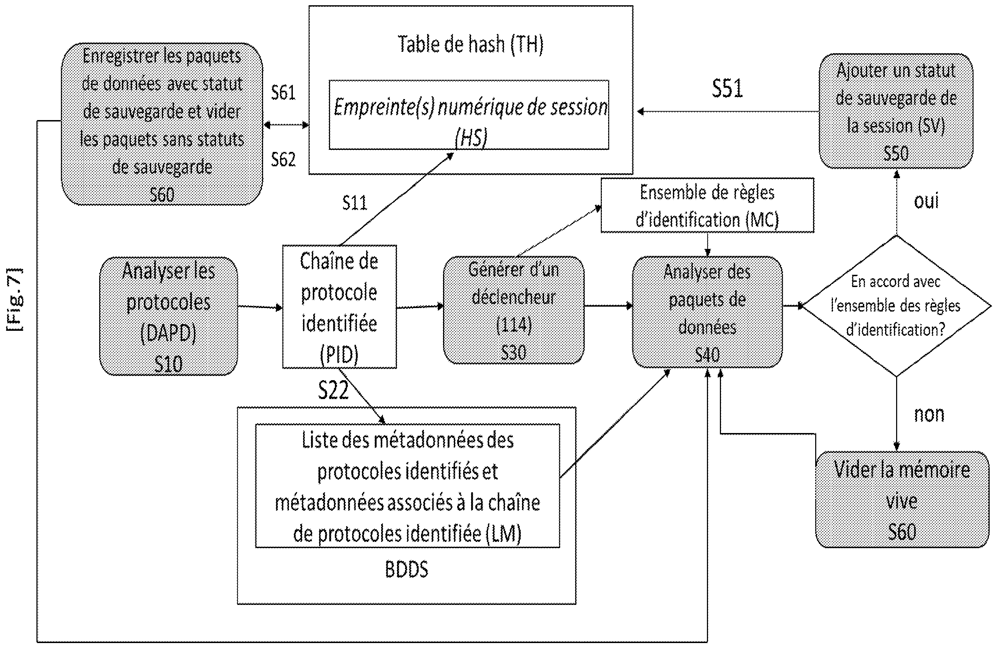

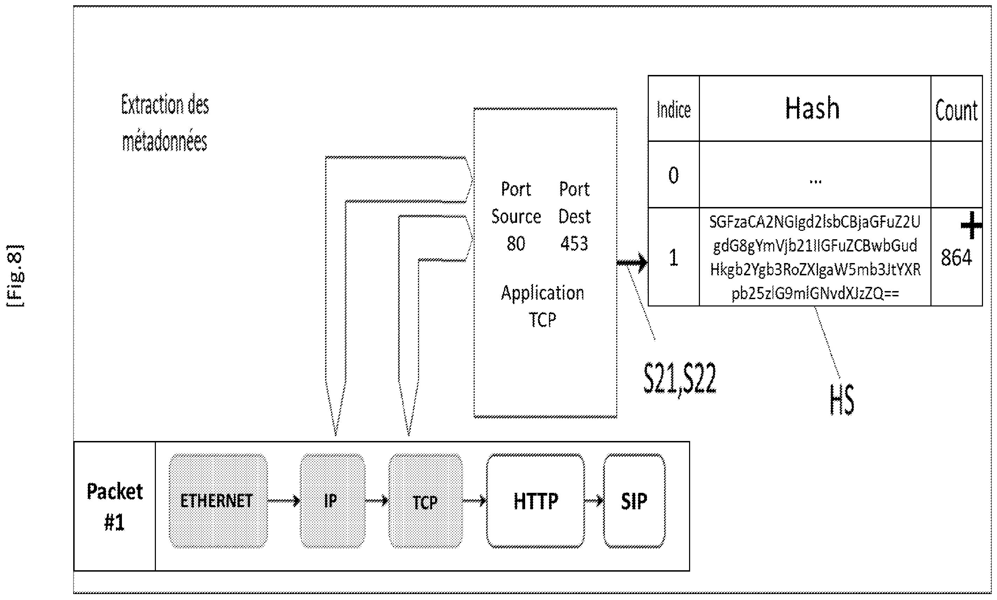

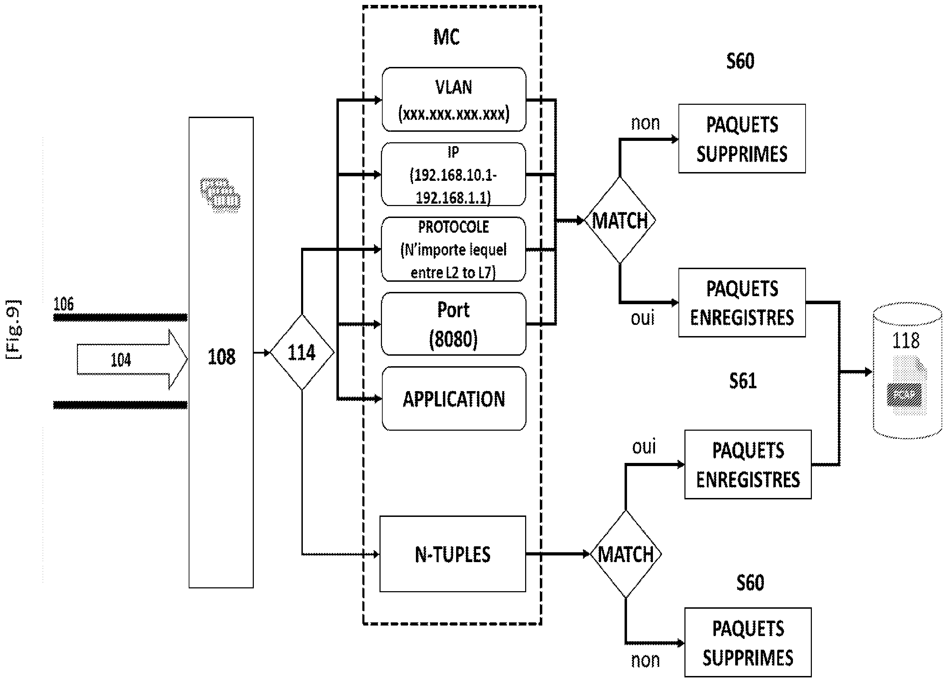

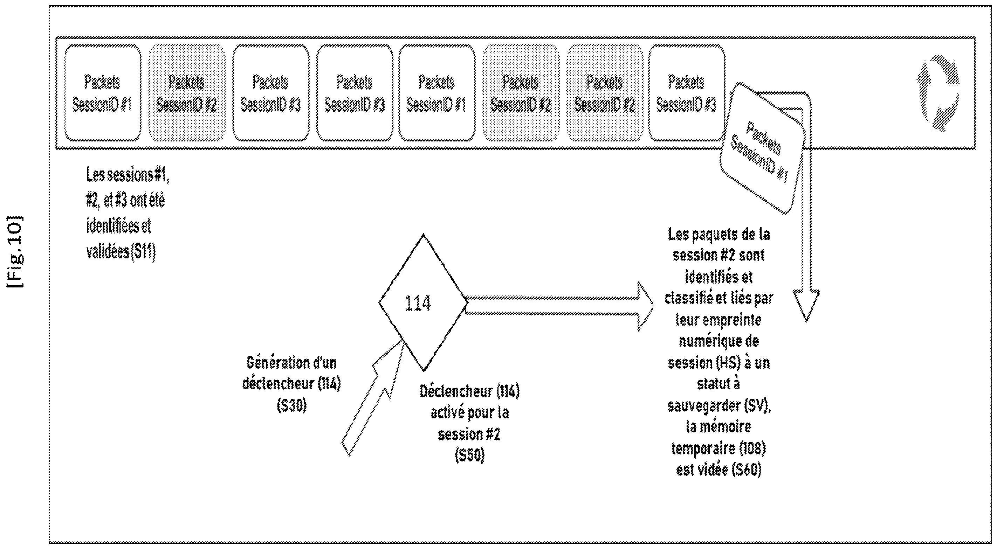

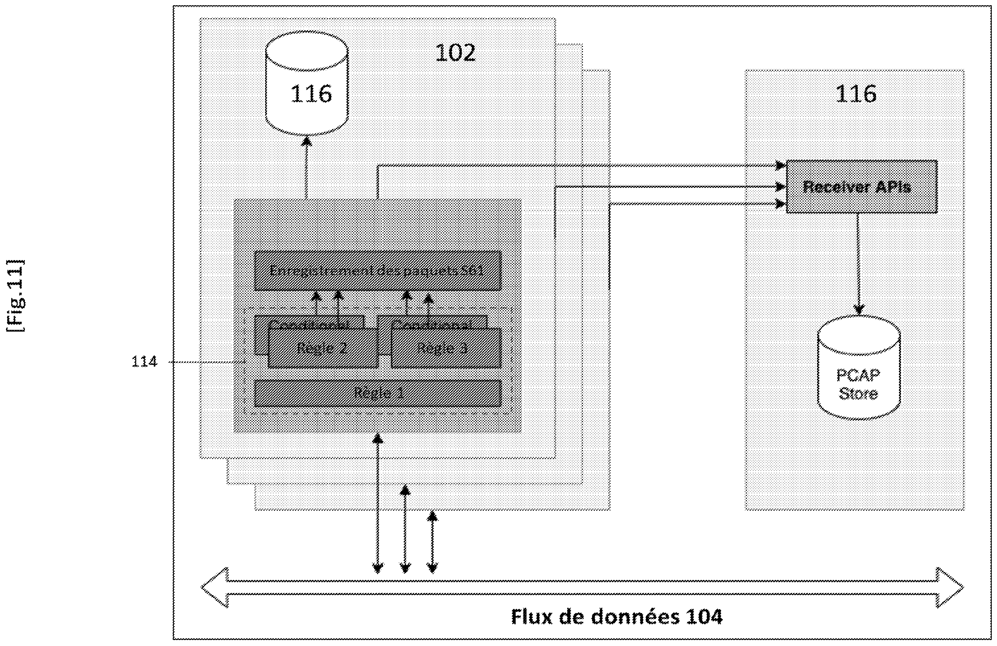

Les techniques ci-dessus sont décrites plus en détail en référence aux figures 1 à 11. Il convient de noter que la description et les chiffres ne font qu'illustrer les principes du présent objet ainsi que les exemples décrits dans le présent document et ne doivent pas être interprétés comme une limitation au présent objet. Il est donc entendu que divers arrangements peuvent être conçus qui, bien qu'ils ne soient pas explicitement décrits ou montrés dans le présent document, les énoncés ci-après faisant état de principes, d'aspects et de mises en œuvre du présent objet, ainsi que des exemples spécifiques de ceux-ci, sont destinés à englober des équivalents de ceux-ci.

La figure 1 illustre un environnement de communication 100 mettant en œuvre un système d'analyse de paquets de données 102.

En références aux figures 1 à 5, le système 102 selon l'invention comprend tout d'abord des moyens d'interface réseau NIC configurés pour recevoir un flux de données en provenance d'un canal de communication 106.

En pratique, les moyens d'interface réseau NIC sont couplée au processeur 202 et à la mémoire temporaire 108. La carte réseau NIC peut être un composant intégré du système 102 ou un composant séparé couplé à l'extérieur au système 102.

Dans un exemple de mise en œuvre du présent objet, le système 102 peut être mis en œuvre par un fournisseur de services de réseau, fournissant une connectivité réseau à un ou plusieurs abonnés, tels que des organisations gouvernementales, des sociétés multinationales, des sociétés, des entreprises et d'autres établissements. Le fournisseur de services de réseau peut servir de canal de connexion entre le canal de communication 106 et les appareils informatiques de ses abonnés. Il convient de noter qu'en dehors du système 102, le fournisseur de services de réseau peut mettre en œuvre divers autres équipements, dispositifs, nœuds de réseau interconnectés par une ou plusieurs liaisons de réseau câblées ou sans fil pour fournir une connectivité réseau aux abonnés. Les nœuds du réseau peuvent généralement inclure des commutateurs, des routeurs, des points d'accès et des liaisons de données qui peuvent faciliter la communication entre divers hôtes d'abonnés (par exemple, des ordinateurs serveurs, des ordinateurs clients, des appareils mobiles, etc.) qui peuvent produire et consommer du trafic de données.

Dans un autre exemple, le système 102 peut être mis en œuvre par des établissements / organisations individuels, fournissant une connectivité et une sécurité réseau à un ou plusieurs de ses utilisateurs.

En outre, le système 102 peut être mis en œuvre en tant que périphérique matériel autonome ou peut être mis en œuvre dans un équipement de communication connu, en fonction de la mise en œuvre et de l'utilisation.

Comme décrit ci-dessus, le système 102 peut recevoir des paquets de données 104 d'un canal de communication 106.

En pratique, le canal de communication 106 peut être un réseau sans fil ou câblé, ou une combinaison de ceux-ci. Le réseau de communication peut être un ensemble de réseaux individuels, interconnectés les uns aux autres et fonctionnant comme un seul grand réseau.

Des exemples de tels réseaux individuels comprennent, sans toutefois s'y limiter, le réseau du Système mondial de communication mobile (GSM), le réseau du Système universel de télécommunications mobiles (UMTS), le réseau LTE (Long Term Evolution), le réseau de services de communications personnelles (PCS), le réseau d'accès multiple par répartition dans le temps (AMRC), le réseau CDMA (Code-Division Multiple Access), le réseau de nouvelle génération (NGN), le réseau téléphonique public commuté (RTPC) et le réseau numérique à intégration de services (RNIS). Selon la terminologie, le réseau de communication comprend diverses entités de réseau, telles que des passerelles, des commutateurs et des routeurs ; toutefois, ces détails ont été omis pour maintenir la brièveté de la description.

Dans un exemple d'implémentation, la carte réseau NIC peut séparer le flux de données dans une période prédéfinie en une ou plusieurs files d'attente de traitement et allouer chaque file d'attente de traitement à au moins un cœur de traitement 204-1, 204-2, 204-3, ..., 204-n.

A titre d'exemple, la carte réseau NIC peut séparer le flux de données dans les files d'attente de traitement multiples en fonction du critère de ségrégation, qui peut être prédéfini ou basé sur les préférences de l'utilisateur.

Il convient de noter que chacun des multiples cœurs de traitement 204-1, 204-2, 204-3, ..., 204-n peut permettre d'exécuter différentes instances des multiples moteurs sur ceux-ci. Par exemple, des instances distinctes du moteur d'analyse de protocole 206, du moteur de surveillance 306 et du moteur de correction 308 peuvent être exécutées en parallèle sur chacun des multiples cœurs de traitement 204-1, 204-2, 204-3, ..., 204-n.

Cependant, pour faciliter la compréhension, la mise en œuvre du système selon l'invention a été expliqué en ce qui concerne un seul cœur de traitement 204-1 du processeur 202, ci-après dénommé le cœur de traitement 204.

Le système 102 selon l'invention comprend en outre au moins un processeur 202 comportant au moins un cœur de traitement 204 pour traiter un nombre prédéterminé de paquets de données par minute ppm.

En pratique, le processeur 202 peut inclure plusieurs cœurs de traitement 204-1, 204-2, 204-3, ..., 204-n.

Les fonctions du bloc fonctionnel étiqueté comme « processeur(s) », peuvent être fournies par l'utilisation de matériel dédié ainsi que de matériel capable d'exécuter des instructions. Lorsqu'elles sont fournies par un processeur, les fonctions peuvent être fournies par un seul processeur dédié, par un seul processeur partagé ou par une pluralité de processeurs individuels, dont certains peuvent être partagés. En outre, l'utilisation explicite du terme « processeur » ne serait pas interprétée comme se référant exclusivement au matériel capable d'exécuter des instructions et peut implicitement inclure, sans s'y limiter, le matériel de processeur de signal numérique (DSP), le processeur réseau, le circuit intégré spécifique à l'application (ASIC), la mémoire en lecture seule (ROM) pour le stockage des instructions, la mémoire temporaire 108 (RAM), le stockage non volatil. D'autres matériels, standard et/ou personnalisés, peuvent également être inclus.

Le système 102 comprend en outre une mémoire temporaire 108, couplée au processeur 202, et apte à mettre en mémoire une pluralité de lots de paquets de données 104 en provenance des moyens d'interface réseau NIC.

Selon un mode de réalisation de l'invention, le système 102 peut surveiller et gérer les paquets de données 104. Le système 102 peut d'abord stocker les paquets de données 104 d'une période prédéfinie dans la mémoire temporaire 108.

A titre d'exemple non limitatif, la mémoire temporaire 108 peut être implémentée sur une mémoire locale, une mémoire externe ou une combinaison de celles-ci, à l'aide de registres, de mémoires primaires, de mémoires cache ou de mémoires secondaires, et pouvant être implémentée sur tout support lisible par ordinateur, y compris, par exemple, la mémoire volatile (par exemple, la RAM) et / ou la mémoire non volatile (par exemple, EPROM, mémoire flash, etc.).

La mémoire temporaire 108 peut fournir des paquets de données 110 pour l'analyse de protocole et de données. Il serait apprécié qu'un flux de trafic de données reçu du canal de communication 106 dans le laps de temps prédéfini, tel que les paquets de données 104, puisse être séparé dans une ou plusieurs files d'attente de traitement différentes avant d'être enregistré sur la mémoire temporaire 108. La ségrégation des paquets de données 104 en une ou plusieurs files d'attente de traitement peut être basée sur un critère de ségrégation, qui peut être prédéfini ou basé sur les préférences de l'utilisateur.

Le système 102 peut en outre inclure les moteurs 302, où les moteurs 302 peuvent inclure un moteur d'analyse de protocole 206, un moteur de surveillance 306.

A titre d'exemple, les moteurs 302 peuvent être implémentés comme une combinaison de matériel et de firmware. Dans les exemples décrits ici, de telles combinaisons de matériel et de micrologiciel peuvent être mises en œuvre de plusieurs manières différentes. Par exemple, le micrologiciel du moteur peut être des instructions exécutables du processeur stockées sur un support de stockage non transitoire lisible par machine et le matériel du moteur peut inclure une ressource de traitement (par exemple, implémentée en tant que processeur unique ou une combinaison de plusieurs processeurs) pour exécuter ces instructions.

Dans les présents exemples, le support de stockage lisible par machine peut stocker des instructions qui, lorsqu'elles sont exécutées par la ressource de traitement, implémentent les fonctionnalités du moteur. Dans de tels exemples, le système 102 peut inclure le support de stockage lisible par machine stockant les instructions et la ressource de traitement pour exécuter les instructions. Dans d'autres exemples du présent sujet, le support de stockage lisible par machine peut être situé à un endroit différent, mais accessible au système 102 et au processeur 202.

Le système 102 comprend également des données 304, qui servent, entre autres, de référentiel pour stocker des données qui peuvent être récupérées, traitées, reçues ou générées par le moteur d'analyse de protocole 206, le moteur de surveillance 306 et le moteur de correction 308. Les données 304 peuvent inclure les données d'analyse de protocole 310, les données d'événement 312, les données de déclenchement 314 et d'autres données 316. Dans un exemple, les données 304 peuvent être stockées dans la mémoire 108.

Le moteur d'analyse de protocoles 206 (ou sessions de communication) et de données (appelé ci-après moteur d'analyse 206) du système selon l'invention est apte à être exécuté sur au moins un cœur de traitement 204, et configuré pour permettre la réception S0 d'une pluralité de lots de paquets de données 104 dans un délai prédéfini via un canal de communication 106.

En pratique, les paquets de données 104 fournis pour le moteur d'analyse de chaines de protocoles 206 peuvent correspondre à une file d'attente de traitement de la mémoire temporaire 108 et les paquets de données d'autres files d'attente de traitement (non illustrés) peuvent être accessibles séparément à partir de la mémoire temporaire 108 pour le moteur d'analyse de chaines de protocoles 112.

Le moteur d'analyse de protocoles 206 est en outre apte à mettre en œuvre une analyse de protocole et de données des paquets de données 104, et est configuré pour effectuer S10, pour chaque lot de paquets de données 104, une analyse de protocoles DAPD permettant d'identifier les protocoles de communication de la chaine de protocoles, et valider au moins une session associée.

L'analyse DAPD des paquets de données 104 peut permettre la détermination du/des protocoles de communication des paquets de données, ainsi que l'analyse et l'extraction des métadonnées des paquets de données analysés. Le moteur d'analyse de protocole 206 peut effectuer une analyse DAPD des paquets de données 104 de plusieurs manières.

Dans un exemple, le moteur d'analyse de protocole 206 peut effectuer une analyse par classification explicite, permettant de vérifier si un protocole identifié n'annonce pas le ou les protocoles suivants.

Le moteur d'analyse de protocole 206 peut également effectuer une détection par classification de session, permettant de vérifier si à partir d'enchaînement de protocoles déjà identifié, il est possible de conclure quant à la nature du protocole analysé.

Enfin, le moteur d'analyse de protocole 206 peut également effectuer une détection par inspection approfondie des paquets (DPI) sur les paquets de données. Dans cet exemple, le moteur d'analyse de protocole 206 peut effectuer le DPI sur les couches 2 à couche 7 du modèle OSI (Open Systems Interconnection).

Par la suite, le moteur d'analyse de protocole 206 peut effectuer une analyse et une extraction de paquets de données pour les paquets de données en fonction des protocoles de communication identifiés.

En outre, le moteur d'analyse de protocoles 206 est configuré pour calculer S21 au moins une empreinte numérique de session HS associée à une chaîne de protocole identifiée PID dont la session est validée, selon une fonction de hachage choisie.

En pratique, le moteur d'analyse de protocoles 206 est configuré pour enregistrer S22 l'empreinte numérique de session calculée HS dans au moins une table de hash TH, et générer et sauvegarder une liste LM des métadonnées associées MPID aux protocoles identifiés PID de la chaine de protocoles de la session validée dans une base de données de connaissance BDDS.

Le système 102 selon l'invention comprend en outre le moteur de surveillance 306 exécutable sur au moins un cœur de traitement 204, lequel le moteur est apte à générer S30 au moins un déclencheur 114 basé sur les résultats d'analyse de protocoles DAPD, dans lequel l'activation du déclencheur 114 est indicative de la correspondance entre au moins une règle d'identification de métadonnées cibles MC, et la liste LM des métadonnées associées MPID aux protocoles identifiés PID de la chaine de protocoles de la session validée.

En pratique, le déclencheur 114 ainsi généré est apte à traiter et appliquer une liste dynamique de règles d'identification de métadonnées cibles MC.

Les métadonnées cibles MC des règles d'identification du déclencheur 114 appartiennent au groupe formé par métadonnées natives, métadonnées calculées à partir de formules mathématiques choisies.

A titre d'exemple non limitatif, les métadonnées cibles (MC) sont représentatives de paramètres réseau choisis appartenant au groupe formé par IP destinataire, IP source, Port destinataire, Port Source, protocole, adresse IP, port, paramètres de qualité de service QoS, Tag de réseau, Volume de la session, taille des paquets, nombre de répétition (retry en anglais), version, type et version de l'algorithme de chiffrement, type de chiffrement, CERT (Computer Emergency Response Team en anglais) du certificat , valeur du SNI (indication du nom du serveur ou Server Name Indication en anglais), Taille des paquets, IP retournée, drapeau d'erreurs (flag error en anglais), nom de domaine, version du client, version du serveur, version d'algorithme de chiffrement, algorithme de compression, horodatage, Version d'IP, nom d'hébergeur (hostname en anglais), durée de bail (lease-time en anglais), URL, agent d'utilisateur, nombre d'octet du contenu attaché, type de contenu, code d'état, entête de cookie, nom du client, service de la requête, valeur du code d'erreur, type de requête, valeur du protocole, horodatage de réponse, niveau de privilège, type et langue du clavier, identification du produit, taille d'écran, ou toute autres métadonnées spécifiques analogues extraites des protocoles dans un ou plusieurs paquets de données de la session validée, métadonnées spécifiques analogues extraites du contenu attaché à un ou plusieurs paquets de données de la session validée.

Selon un mode de réalisation de l'invention, la survenue d'un événement, tel qu'une détérioration de la QoS, une modification de la configuration des périphériques informatiques, une modification des capacités réseau, un risque de sécurité ou similaire peut influencer la nature des règles d'identification des métadonnées ciblées MC appliquées.

Dans un exemple, les données d'événement 312 peuvent stocker un ensemble de paramètres qui peuvent être utilisés comme référence pour l'identification de l'occurrence d'un événement pendant l'analyse S10 des chaînes de protocoles de l'ensemble de paquets de données et ainsi participer à la mise à jour des règles d'identification des métadonnées ciblées MC.

Outre l'identification de l'occurrence d'événements, l'ensemble des paramètres peut également indiquer un critère défini par l'utilisateur pour la filtration des paquets de données. Par exemple, un administrateur réseau peut être conscient que les paquets de données reçus d'une adresse IP particulière peuvent présenter un risque pour la sécurité. Dans une telle situation, l'ensemble des paramètres stockés dans les données d'événement 312 peut être mis à jour pour identifier et filtrer l'ensemble des paquets de données reçus de l'adresse IP particulière. De même, l'ensemble des paramètres peut inclure une liste de protocoles prédéfinis, de sessions et d'autres facteurs pouvant augmenter la vulnérabilité du réseau.

Le moteur de surveillance 306 selon l'invention est en outre configuré pour analyser S40 les métadonnées des paquets de données de la session validée, stockés dans les moyens de mémoire temporaire 108 en fonction de la liste LM enregistrée des métadonnées associées MPID aux protocoles identifiés PID dans la base de données de connaissance BDDS, et vérifier si les métadonnées associées MPID aux protocoles identifiés PID sont en accord avec la règle d'identification de métadonnées cibles MC du déclencheur 114.

La liste de lecture LM se base sur une extraction de métadonnées de type n-tuples.

Avantageusement, cette approche n-tuples permet d'extraire des métadonnées associées MPID spécifique au protocole identifié PID et ainsi s'affranchir des contraintes liées à l'approche 5-tuples et de la visibilité restreinte qui lui est associée.

A partir des protocoles identifiés PID suivants sont extraits à titre d'exemples non limitatifs, les métadonnées suivantes :

**Tableau d'exemples de métadonnées extractibles pour une liste de protocoles choisis.**

| PROTOCOLES | | EXEMPLES DE METADONNEES EXTRAITES |
|---|---|---|
| VLAN et VxLAN | | Tag de réseau |
| MPLS | | Id |
| TCP | | Volume de la session, taille des paquets, nombre de retry |
| TLS | | version, type et version de l'algorithme de chiffrement, CERT du certificat, valeur du SNI |
| DNS | | Taille des paquets, IP retournée, Flag d'erreurs, nom de domaine, rcode |
| SSH | | Version du client, version du serveur, version d'algorithme de chiffrement, algorithme de compression |
| | DHCP | Timestamp, Version d'IP, Adresses IP du serveur, adresse IP de endpoint, le port/protocole d'origine - TCP ou UDP - le hostname du serveur ou du endponit, lease-time,... |
| | HTTP | Url, user-agent, nombre d'octet du payload, content-type, status code, header de cookie, ... |
| | Kerberos | nom du client, service requested, valeur du code d'erreur, type de requête, valeur du protocole, timestamp de réponse, niveau de privilège, type de chiffrement, ... |
| | LDAP | durée de session, nombre de logon-errors, flag de fin de session, code de résultat de query, code d'erreur, ... |
| | RDP | cookie username, type et langue du clavier, version du client, product ID, taille d'écran, ... |

En d'autres termes, la liste LM enregistrée des métadonnées associées MPID aux protocoles identifiés PID sert de grille de lecture audit moteur de surveillance 306 afin d'avantageusement économiser des ressources.

En cas d'accord avec la ou les règles d'identification de métadonnées cibles MC, le déclencheur 114 est activé S50 et le moteur de surveillance 306 attribue alors à au moins une empreinte numérique de session HS de la session validée conservée sur la table de Hash TH un statut de sauvegarde SV.

L'attribution d'un statut de sauvegarde SV par le moteur de surveillance 306 comprend la mise à jour S51 de la table de hash TH enregistrée à la suite de l'étape d'enregistrement S22 par le moteur d'analyse 206 d'au moins une empreinte numérique de session HS, par attribution et l'enregistrement sur la table de hash TH d'un statut de sauvegarde SV à au moins une des empreintes numériques de session HS de la session validée.

Selon un mode de réalisation particulier de l'invention, le moteur de surveillance 306 est configuré pour analyser des métadonnées associées au contenu attaché MP de la chaîne de protocole de la session validée lors de l'analyse S40 des métadonnées associées MPID aux protocoles identifiés PID des paquets de données de la session validée.

Une telle analyse est mise en œuvre si au moins une règle d'identification de métadonnées cibles MC du déclencheur 114 comprend des métadonnées cibles MC en relation avec un contenu attaché.

Le moteur de surveillance 306 selon l'invention est en outre configuré pour mettre en œuvre un vidage S60 des moyens de mémoire temporaire 108 pour chaque lot de paquets de données dont la ou les empreintes numériques de session HS sont dépourvues d'un statut de sauvegarde SV.

Selon un mode de réalisation de l'invention, les moyens de mémoire temporaire 108 sont vidés progressivement lorsque l'utilisation de la mémoire vive associée est comprise entre 95% à 98%.

Selon un mode de réalisation particulier de l'invention, le vidage des moyens de mémoire temporaire 108 est effectué chronologiquement par suppression des paquets de données les plus anciens à un rythme de vidage choisi.

En pratique, le moteur de surveillance 306 est configuré pour consulter S61 la table de hash TH, et vérifier si la ou les empreintes numériques de session HS associées aux paquets de données dont la session est validée, sont pourvues d'un statut de sauvegarde SV.

Le moteur de surveillance 306 selon l'invention est en outre configuré pour mettre en œuvre un enregistrement S61 sur une mémoire de stockage 116, l'ensemble des paquets de données dont au moins une empreinte numérique de session HS associée est pourvue d'un statut de sauvegarde SV.

Selon un premier mode de réalisation particulier de l'invention, basé sur la génération S30 du déclencheur 114, le moteur de surveillance 306 peut générer une notification indiquant la gravité de l'événement. Le moteur de surveillance 306 peut également inclure dans la notification, un ensemble d'actions qui peuvent être effectuées pour atténuer l'événement.

Selon un second mode de réalisation particulier de l'invention, basé sur la génération S30 du déclencheur 114 pour l'ensemble de paquets de données, le système selon l'invention peut comprendre un moteur de correction 308.

Ledit moteur de correction 308 est apte à effectuer un traitement supplémentaire sur l'ensemble de paquets de données. Par exemple, dans un exemple, le moteur de correction 308 peut remplacer l'ensemble de paquets de données par un ensemble de paquets de données corrigés. Dans un autre exemple, le moteur de correction 308 peut modifier l'ensemble des paquets de données.

Une fois que le moteur de correction 308 a effectué le traitement sur l'ensemble des paquets de données, le moteur d'analyse de protocole 206 peut soumettre à nouveau les paquets de données à une analyse DAPD. La répétition de l'analyse peut permettre de déterminer si le traitement de l'ensemble de paquets de données a effectivement traité ou atténué la survenue de l'événement. La manière dont l'analyse DAPD peut être effectuée sur les paquets de données est décrite ci-dessus et n'a pas été reproduite par souci de brièveté. Si le moteur d'analyse de protocole 206 détermine que l'événement a été résolu, le moteur d'analyse de protocole 206 peut libérer les paquets de données mis à jour pour la consommation par un périphérique informatique destinataire.

Toutefois, si le moteur d'analyse de protocole 206 détermine qu'un autre événement s'est produit pendant le DAPD des paquets de données mis à jour, le moteur d'analyse de protocole 206 peut générer un autre déclencheur. Dans une telle situation, le moteur d'analyse de protocole 206 peut retraiter un autre ensemble de paquets de données qui peuvent avoir provoqué l'autre événement. Dans un exemple, le retraitement peut inclure le remplacement de l'ensemble de paquets de données par un ensemble de paquets de données corrigés ou la modification de l'ensemble de paquets de données.

De cette manière, les anomalies ou les dysfonctionnements dans le trafic de données peuvent être identifiés et traités en temps opportun. En outre, les paquets de données peuvent être analysés pour détecter de manière préventive les risques de sécurité et répondre aux préoccupations connexes.

Le système 102 selon l'invention comprend également une mémoire de stockage 116 couplée au processeur 202 apte à enregistrer 508 pour un traitement ultérieur, l'ensemble des paquets de données dont l'empreinte numérique de session HS associée est pourvue d'un statut de sauvegarde SV, le déclencheur 114 formant donc filtre d'enregistrement.

A titre d'exemple, la mémoire de stockage 116 peuvent être des moyens de stockages locaux, ou à distance, tel que du type Cloud.

En outre, le système 102 peut être couplé à une base de données de connaissances sur les paquets de données BDDS, où la base de données de connaissances BDDS sur les paquets de données correspond à la base de connaissance BDC pour la détection de protocoles et la base de données dynamique de session BDDS pour la détection de session.

Dans un exemple d'implémentation du système selon l'invention, la carte réseau NIC peut recevoir un flux de données de paquets de données 104 via un réseau de communication. La carte réseau NIC peut ensuite séparer le flux de données des paquets de données 104 en plusieurs files d'attente de traitement, où chacune des multiples files d'attente de traitement doit être traitée par un cœur de traitement distinct du processeur 202. La carte réseau NIC peut ensuite transférer les multiples files d'attente de traitement vers la mémoire temporaire 108 et peut informer simultanément le processeur 202 de l'adresse à laquelle chacune des files d'attente de traitement multiples est stockée sur la mémoire temporaire 108.

Dans un exemple d'implémentation, l'une des instances du moteur d'analyse de protocole 206 s'exécutant sur l'un des cœurs de traitement, par exemple le cœur de traitement 204-1, peut exécuter un DAPD sur les paquets de données inclus dans la file d'attente de traitement correspondante. Dans un exemple, le moteur d'analyse de protocole 206 peut analyser un premier ensemble de paquets de données de la file d'attente de traitement pour déterminer les caractéristiques du premier ensemble de paquets de données. Le moteur d'analyse de protocole 206 peut ensuite effectuer le DAPD pour un premier paquet de données suivant le premier ensemble de paquets de données afin de prédire un protocole de communication pour le paquet de données. Le moteur d'analyse de protocole 206 peut effectuer le DAPD sur le premier paquet de données sur la base d'un arbre de décision dynamique corrélé à la base de données de connaissances sur les paquets de données BDDS. Le moteur d'analyse de protocole 206 peut ensuite analyser et extraire le premier paquet de données en fonction de l'étiquette de données qui y est associée.

Dans un exemple, le moteur d'analyse de protocole 206 peut effectuer en parallèle le DAPD et l'analyse et l'extraction de données pour les paquets de données inclus dans la file d'attente de traitement. Par exemple, une fois que le moteur d'analyse de protocole 206 a prédit le protocole de communication pour le premier paquet de données, le premier paquet de données peut être transféré pour l'analyse et l'extraction de données. Alors que le moteur d'analyse de protocole 206 effectue l'analyse et l'extraction de données sur le premier paquet de données, le moteur d'analyse de protocole 206 peut simultanément commencer à exécuter DAPD pour un deuxième paquet de données suivant le premier paquet de données dans le flux de données.

L'exécution simultanée du DAPD et de l'analyse et de l'extraction des données pour les paquets de données sur un seul cœur de traitement du processeur facilite l'évolutivité pour gérer toute altération de l'afflux de données reçues via le réseau de communication. Dans un exemple, les techniques décrites ci-dessus peuvent faciliter le traitement des flux de données ayant un trafic de données supérieur à 100 Gbps.

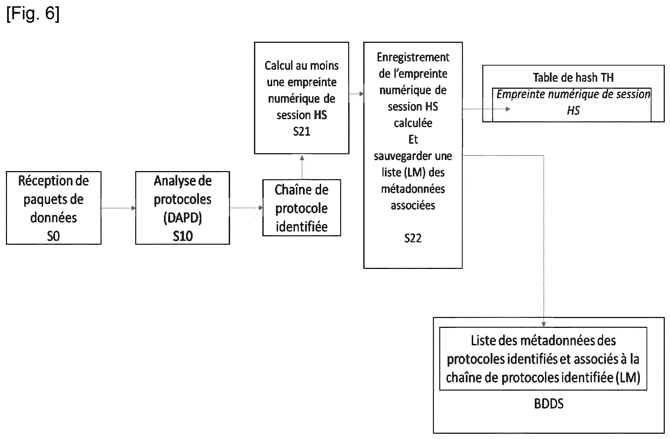

En référence aux figures 6 à 11, l'invention porte également sur un procédé de traitement d'un flux de données comprenant des lots de paquets 104 définis chacun par une chaine de protocoles de communication associée à au moins une session.

Le procédé selon l'invention comprend une première étape de réception S0 d'une pluralité de lots de paquets de données 104 dans un délai prédéfini via un canal de communication 106, et de stockage desdits lots de paquets 104 dans une mémoire temporaire 108.

A titre d'exemple, la pluralité de lots de paquets de données 104 peut être reçue par une carte d'interface réseau NIC du système 102.

Le procédé comprend en outre une étape S10 d'analyse de protocoles DAPD permettant d'identifier les protocoles de communication de la chaine de protocoles, et apte à permettre l'extraction de métadonnées de la pluralité des paquets de données analysés.

L'étape S10 d'analyse de protocoles DAPD consiste en une succession de méthodes de classifications conditionnelles parmi lesquelles une détection par classification explicite, configurée pour vérifier si un protocole donné annonce le protocole suivant dans la chaîne de protocole.

L'analyse de protocole DAPD comprend en outre une détection dite de session configurée pour identifier le ou les protocoles suivant en utilisant les chaînes de protocoles précédemment identifiées.

Enfin, l'analyse de protocole DAPD comprend une détection par inspection profonde de paquets, laquelle consiste en à identifier le protocole de communication du paquet suivant selon un arbre de décision dynamique corrélé à une base de données de connaissances BDC comprenant des paramètres d'analyse de protocoles et une base de marqueurs spécifiques, aussi appelés labels, spécifiques à chaque protocole connu.

En cas de défaut d'identification du protocole suivant, l'analyse de protocoles DAPD est configuré pour émettre une liste de candidats de protocoles potentiels à prendre en compte selon au moins deux branches de détection possible, chaque détection étant rattachée à une sous-session déterminée pour analyser le ou les protocoles suivants par répétition des analyses selon la classification par détection explicite, par détection de session, et par inspection profonde de paquet jusqu'à identifier au moins un protocole dont l'identité est certaine.

En pratique, l'étape S10 d'analyse de protocoles DAPD comprend une sous-étape de validation S11 d'au moins une session associée à la chaine de protocoles lorsque toute la chaîne de protocoles a été identifiée et classifiée.

On entend par session, une session de communication représentative d'un enchaînement de protocoles.

On entend par validation S11 d'une session l'identification complète de la chaîne de protocoles associée.

Le procédé selon l'invention comprend en outre une étape de calcul S21 d'au moins une empreinte numérique de session HS associée à une chaîne de protocoles identifiée PID dont la session est validée lors de l'étape de validation S11.

En pratique, le calcul S21 de l'empreinte numérique de session HS est effectué après chaque protocole analysé de la chaîne de protocoles selon une fonction de hachage choisie.

Le calcul S21 de l'empreinte numérique HS se base sur l'extraction de métadonnées de chaque protocole identifié lors de l'étape d'analyse S10, et le hachage d'une liste définie dynamique propre à chaque type de protocoles, suivant une approche dite de type n-tuples. Chaque protocole aura donc un nombre de paramètres défini utilisé pour calculer l'empreinte numérique de session HS, et permettant ainsi une fois la session validée d'obtenir un identifiant de session complètement unique.

L'étape de calcul S21 est suivie d'une étape d'enregistrement S22 de ladite ou lesdites empreintes numériques de session HS calculées dans au moins une table de hash TH, ainsi que la sauvegarde d'une liste LM des métadonnées associées MPID aux protocoles identifiés PID de la chaine de protocoles de la session validée dans une base de données de connaissance BDDS.

Avantageusement, la liste LM des métadonnées associées MPID aux protocoles identifiés PID de la chaine de protocoles de la session validée permet d'identifier les métadonnées sur lesquelles toute analyse subséquente pourra se baser et ainsi économiser des ressources en ne se concentrant que sur les informations disponibles de manière certaine.

Le procédé selon l'invention comprend en outre une étape de génération S30 d'au moins un déclencheur 114 basé sur les résultats d'analyse de protocoles DAPD.

Ledit déclencheur 114 comprend une série de commandes mise en œuvre par activation selon des conditions choisies, et dans lequel l'activation est indicative de la correspondance entre au moins une règle d'identification de métadonnées cibles MC, et les métadonnées associées MPID aux protocoles identifiés PID dont la liste LM est enregistrée dans la base de données de connaissance BDDS.

Selon un mode de réalisation de l'invention, le déclencheur 114 est apte à traiter et appliquer une liste dynamique de règles d'identification de métadonnées cibles MC.

On entend par métadonnées cibles MC, toutes métadonnées natives, ou calculées à partie de formules mathématiques choisies, apte à permettre une sélection précise d'une partie d'un flux de données 104.

A titre d'exemple non limitatif, les métadonnées cibles (MC) sont représentatives de paramètres réseau choisis appartenant au groupe formé par IP destinataire, IP source, Port destinataire, Port Source, protocole, adresse IP, port, paramètres de qualité de service QoS, Tag de réseau, Volume de la session, taille des paquets, nombre de répétition (retry en anglais), version, type et version de l'algorithme de chiffrement, type de chiffrement, CERT (Computer Emergency Response Team en anglais) du certificat , valeur du SNI (indication du nom du serveur ou Server Name Indication en anglais), Taille des paquets, IP retournée, drapeau d'erreurs (flag error en anglais), nom de domaine, version du client, version du serveur, version d'algorithme de chiffrement, algorithme de compression, horodatage, Version d'IP, nom d'hébergeur (hostname en anglais), durée de bail (lease-time en anglais), URL, agent d'utilisateur, nombre d'octet du contenu attaché, type de contenu, code d'état, entête de cookie, nom du client, service de la requête, valeur du code d'erreur, type de requête, valeur du protocole, horodatage de réponse, niveau de privilège, type et langue du clavier, identification du produit, taille d'écran, ou toute autres métadonnées spécifiques analogues extraites des protocoles dans un ou plusieurs paquets de données de la session validée, métadonnées spécifiques analogues extraites du contenu attaché à un ou plusieurs paquets de données de la session validée.

Selon un mode de réalisation particulier de l'invention, les métadonnées cibles MC peuvent comprendre des métadonnées associées au contenu attaché MP de la chaîne de protocole de la session validée.

Selon un mode de réalisation de l'invention, le déclencheur 114 peut être généré à la suite de l'occurrence d'un événement pendant l'étape S10 d'analyse de protocoles DAPD.

En outre, un événement peut inclure : une détérioration de la qualité de service, une modification de la configuration des périphériques informatiques, une modification des capacités du réseau ou un risque de sécurité, pour lequel un déclencheur sera généré spécifiquement en fonction des paramètres de l'évènement rencontré.

Le procédé selon l'invention comprend en outre une étape d'analyse S40 les métadonnées associées MPID aux protocoles identifiés PID des paquets de données de la session validée, stockés dans les moyens de mémoire temporaire 108 en fonction de la liste LM enregistrée des métadonnées associées MPID aux protocoles identifiés PID dans la base de données de connaissance BDDS.

En d'autres termes, la liste LM enregistrée des métadonnées associées MPID aux protocoles identifiés PID sert de grille de lecture lors de l'analyse S40 les métadonnées associées MPID aux protocoles identifiés PID.

En pratique, l'étape d'analyse S40 les métadonnées associées MPID aux protocoles identifiés PID comprend en outre la vérification de la présence ou absence de correspondance entre les métadonnées associées MPID aux protocoles identifiés PID et au moins une règle d'identification de métadonnées cibles MC du déclencheur 114.

En cas d'accord avec la règle d'identification de métadonnées cibles MC, le procédé selon l'invention comprend une étape d'activation S50 du déclencheur 114, permettant l'attribution à au moins une empreinte numérique de session HS enregistrée de la session validée un statut de sauvegarde SV.

En pratique, l'étape d'activation S50 du déclencheur 114 comprend une sous-étape de mise à jour S51 de la table de hash TH enregistrée à la suite de l'étape d'enregistrement S22 d'au moins une empreinte numérique de session HS, par attribution d'un statut de sauvegarde SV à au moins une empreinte numérique de session HS dont les métadonnées cibles MC sont en correspondance avec les métadonnées analysées.

Selon un mode de réalisation de l'invention, l'étape d'analyse S40 des métadonnées associées au protocoles identifiés PID des paquets de données de la session validée, comprend une sous-étape supplémentaire d'analyse de métadonnées associées au contenu attaché MP de la chaîne de protocole de la session validée, mise en œuvre si au moins une règle d'identification de métadonnées cibles MC du déclencheur 114 comprend des métadonnées cibles MC en relation avec le contenu attaché MP.

Le procédé selon l'invention comprend en outre une étape de vidage S60 de la mémoire temporaire 108.

L'étape de vidage S60 est conditionnelle, et configurée pour vider S60 la mémoire temporaire 108 de chaque lot de paquets de données stocké dont l'empreinte numérique de session HS est dépourvue d'un statut de sauvegarde SV.

Parallèlement, le procédé comprend en outre une sous-étape d'enregistrement S61 de l'ensemble des paquets de données dont au moins une empreinte numérique de session HS associée est pourvue d'un statut de sauvegarde SV.

Une telle étape d'enregistrement S61 sélective permet en outre la sauvegarde spécifique de la session d'intérêt dont les métadonnées cibles MC ou les règles associées du déclencheur 114 ont été reconnues, et ceci avec une absence de contrainte quant à la diversité et la couche sur laquelle les protocoles de la session validée se trouvent.

En pratique l'étape d'enregistrement S61 est mise en œuvre vers une mémoire de stockage 116 pour un traitement ultérieur des paquets de données filtrés.

A titre d'exemple non limitatif, les paquets de données enregistrés dans la mémoire de stockage 116 sont convertis au format PCAP.

Selon un mode de réalisation de l'invention, les étapes de vidage S60 de la mémoire temporaire 108 et d'enregistrement S61 comprennent une sous-étape préalable de consultation S61 de la table de hash TH pour vérifier si au moins une des empreintes numériques de session HS associées aux paquets de données sujet au vidage S60 est pourvue d'un statut de sauvegarde SV.

En pratique, l'exécution de l'étape S10 d'analyse de protocoles DAPD, et l'exécution de l'étape d'analyse S40 des métadonnées des paquets de données de la session validée MPID, se font sur des paquets de données de la couche 2 à la couche 7 du modèle OSI.

Selon un mode de réalisation particulier de l'invention, l'ensemble de paquets de données enregistrés suite à l'étape d'enregistrement S61 peut être remplacé par un ensemble corrigé de paquets de données dans la pluralité des paquets de données. Dans un exemple, l'ensemble de paquets de données peut être remplacé par l'ensemble de paquets de données corrigé par un moteur de correctifs 308 du système 102.

A titre d'exemple, l'ensemble de paquets de données corrigé est analysé selon le procédé conforme à l'invention une nouvelle fois, pour permettre de déterminer si le remplacement de l'ensemble de paquets de données par l'ensemble de paquets de données corrigé a effectivement résolu l'occurrence de l'événement.

On peut comprendre que les étapes S10 à S60 peuvent être effectuées dans le système 102. Les blocs des méthodes S0, S10, S11, S21, S22, S30, S40, S50, S51, S60, S61 et S62 peuvent être exécutés sur la base d'instructions stockées dans un support non transitoire lisible par ordinateur, comme on le comprendra facilement. Le support non transitoire lisible par ordinateur peut inclure, par exemple, des mémoires numériques, des supports de stockage magnétiques, tels que des disques magnétiques et des bandes magnétiques, des disques durs ou des supports de stockage de données numériques lisibles optiquement.

Avantageusement, un tel procédé permet d'utiliser toutes les métadonnées de tous les protocoles pour générer des déclencheurs 114 dont les règles d'identification formant filtres d'enregistrement, rendant lesdits filtres polyvalents et l'architecture d'application des filtres adaptable à tout besoin, et permet en outre de très finement enregistrer le trafic.

Bien que des exemples de la présente invention aient été décrits dans un langage spécifique aux méthodes et/ou aux caractéristiques structurelles, il faut comprendre que la présente invention ne se limite pas aux méthodes ou caractéristiques spécifiques décrites. Au contraire, les méthodes et les caractéristiques spécifiques sont divulguées et expliquées à titre d'exemples de la présente invention. L'invention est uniquement définie par les revendications indépendantes.

## Revendications

1. Procédé de traitement d'un flux de données comprenant des lots de paquets (104), les paquets étant définis chacun par une chaine de protocoles de communication associée à au moins une session, **caractérisé en ce qu'**il comprend les étapes suivantes :
- recevoir (S0) une pluralité de lots de paquets de données (104) via un canal de communication (106) et stocker lesdits lots de paquets (104) dans une mémoire temporaire (108) ;
- effectuer (S10), pour chaque lot de paquets de données (104), une analyse de protocoles (DAPD) permettant d'identifier les protocoles de communication de la chaine de protocoles, et valider (S11) au moins une session associée à la chaine de protocoles lorsque l'identification de la chaîne de protocoles est complète ;
- Calculer (S21) au moins une empreinte numérique de session (HS) associée à une chaîne de protocoles identifiée (PID) dont la session est validée lors de l'étape de validation (S11), le calcul (S21) de l'empreinte numérique (HS) se base sur l'extraction de métadonnées de chaque protocole identifié lors de l'étape d'analyse (S10), et le hachage d'une liste définie dynamique propre à chaque type de protocoles, suivant une approche dite de type n-tuples ; et
- enregistrer (S22) là ou lesdites empreintes numériques de session (HS) calculées dans au moins une table de hash (TH), et sauvegarder une liste (LM) des métadonnées associées (MPID) aux protocoles identifiés (PID) de la chaine de protocoles de la session validée dans une base de données de connaissance (BDDS) ;
- générer (S30) au moins un déclencheur (114) basé sur les résultats d'analyse de protocoles (DAPD), dans lequel l'activation du déclencheur (114) est indicative de la correspondance entre au moins une règle d'identification de métadonnées cibles (MC) et les métadonnées associées (MPID) aux protocoles identifiés (PID) dont la liste (LM) est enregistrée dans la base de données de connaissance (BDDS) ;
- analyser (S40) les métadonnées associées (MPID) aux protocoles identifiés (PID) des paquets de données de la session validée, stockés dans les moyens de mémoire temporaire (108) en fonction de la liste (LM) enregistrée des métadonnées associées (MPID) aux protocoles identifiés (PID) dans la base de données de connaissance (BDDS), et vérifier si les métadonnées associées (MPID) aux protocoles identifiés (PID) sont en accord avec la règle d'identification de métadonnées cibles (MC) du déclencheur (114) ;
- en cas d'accord avec la règle d'identification de métadonnées cibles (MC), activer (S50) le déclencheur (114) et attribuer à au moins une empreinte numérique de session (HS) de la session validée un statut de sauvegarde (SV) ; et
- vider (S60) la mémoire temporaire (108) de chaque lot de paquets de données dont l'empreinte numérique de session est dépourvue d'un statut de sauvegarde (SV), et enregistrer (S61) sur une mémoire de stockage (116) pour un traitement ultérieur, l'ensemble des paquets de données dont au moins une empreinte numérique de session (HS) associée est pourvue d'un statut de sauvegarde (SV).

2. Procédé selon la revendication 1, dans lequel l'étape d'activation (S50) du déclencheur (114) comprend une sous-étape de mise à jour (S51) de la table de hash (TH) enregistrée à la suite de l'étape d'enregistrement (S22) d'au moins une empreinte numérique de session (HS), par attribution d'un statut de sauvegarde (SV) à au moins une empreinte numérique de session (HS).

3. Procédé selon la revendication 1 ou 2, dans lequel l'étape de vidage (S60) de la mémoire temporaire (108) comprend une sous-étape de consultation (S61) de la table de hash (TH) pour vérifier si au moins une des empreintes numériques de session (HS) associées aux paquets de données sujet au vidage (S60) est pourvue d'un statut de sauvegarde (SV).

4. Procédé selon l'une des revendications 1 à 3, **caractérisé en ce que** l'étape d'analyse (S40) des métadonnées associées au protocoles identifiés (PID) des paquets de données de la session validée, comprend une sous-étape supplémentaire d'analyse de métadonnées associées au contenu attaché (MP) de la chaîne de protocole de la session validée, mise en œuvre si au moins une règle d'identification de métadonnées cibles (MC) du déclencheur (114) comprend des métadonnées cibles (MC) en relation avec le contenu attaché (MP).

5. Procédé selon l'une des revendications 1 à 4, **caractérisé en ce que** le déclencheur (114) est apte à traiter et appliquer une liste dynamique de règles d'identification de métadonnées cibles (MC).

6. Procédé selon l'une des revendications 1 à 5, **caractérisé en ce que** les métadonnées cibles (MC) des règles d'identification du déclencheur (114) appartiennent au groupe formé par métadonnées natives, métadonnées calculées à partie de formules mathématiques choisies.

7. Procédé selon l'une des revendications 1 à 6, dans lequel les métadonnées cibles (MC) sont représentatives de paramètres réseau choisis appartenant au groupe formé par IP destinataire, IP source, Port destinataire, Port Source, protocole, adresse IP, port, paramètres de qualité de service QoS, Tag de réseau, Volume de la session, taille des paquets, nombre de répétition (retry en anglais), version, type et version de l'algorithme de chiffrement, type de chiffrement, CERT (Computer Emergency Response Team en anglais) du certificat , valeur du SNI (indication du nom du serveur ou Server Name Indication en anglais), Taille des paquets, IP retournée, drapeau d'erreurs (flag error en anglais), nom de domaine, version du client, version du serveur, version d'algorithme de chiffrement, algorithme de compression, horodatage, Version d'IP, nom d'hébergeur (hostname en anglais), durée de bail (lease-time en anglais), URL, agent d'utilisateur, nombre d'octet du contenu attaché, type de contenu, code d'état, entête de cookie, nom du client, service de la requête, valeur du code d'erreur, type de requête, valeur du protocole, horodatage de réponse, niveau de privilège, type et langue du clavier, identification du produit, taille d'écran, ou toute autres métadonnées spécifiques analogues extraites des protocoles dans un ou plusieurs paquets de données de la session validée, métadonnées spécifiques analogues extraites du contenu attaché à un ou plusieurs paquets de données de la session validée.

8. Procédé selon l'une des revendications 1 à 7, dans lequel l'exécution de l'étape (S10) d'analyse de protocoles (DAPD), et l'exécution de l'étape d'analyse (S40) des métadonnées des paquets de données de la session validée (MPID), se font sur des paquets de données de la couche 2 à la couche 7 du modèle OSI.

9. Système (102) de traitement d'un flux de données comprenant des lots de paquets, les paquets étant définis chacun par une chaine de protocoles de communication rattaché à au moins une session, **caractérisé en ce qu'**il comprend
- des moyens d'interface réseau (NIC) configurés pour recevoir un flux de données en provenance d'un canal de communication (106) ;
- un processeur (202) comprenant au moins un cœur de traitement (204) pour traiter un nombre prédéterminé de paquets de données par minute (ppm) ;
- une mémoire temporaire (108), couplée au processeur (202), et apte à mettre en mémoire une pluralité de lots de paquets de données (104) en provenance des moyens d'interface réseau (NIC) ;
- un moteur d'analyse de protocoles (206) exécutable sur au moins un cœur de traitement (204), dans lequel le moteur d'analyse de protocoles (206) est apte à :
recevoir (S0) une pluralité de lots de paquets de données (104) dans un délai prédéfini via un canal de communication (106);
effectuer (S10), pour chaque lot de paquets de données, une analyse de protocoles (DAPD) permettant d'identifier les protocoles de communication de la chaine de protocoles, et valider au moins une session associée ;
calculer (S21) au moins une empreinte numérique de session (HS) associé à une chaîne de protocole identifiée (PID) dont la session est validée, le calcul (S21) de l'empreinte numérique (HS) se base sur l'extraction de métadonnées de chaque protocole identifié lors de l'étape d'analyse (S10), et le hachage d'une liste définie dynamique propre à chaque type de protocoles, suivant une approche dite de type n-tuples ; et
enregistrer (S22) l'empreinte numérique de session calculée (HS) dans au moins une table de hash (TH), et sauvegarder une liste (LM) des métadonnées associées (MPID) aux protocoles identifiés (PID) de la chaine de protocoles de la session validée dans une base de données de connaissance (BDDS) ;
- un moteur de surveillance (306) exécutable sur au moins un cœur de traitement (204), dans lequel le moteur de surveillance (306) est apte à :
générer (S30) au moins un déclencheur (114) basé sur les résultats d'analyse de protocoles (DAPD), dans lequel l'activation du déclencheur (114) est indicative de la correspondance entre au moins une règle d'identification de métadonnées cibles (MC) et la liste (LM) des métadonnées associées (MPID) aux protocoles identifiés (PID) de la chaine de protocoles de la session validée;
analyser (S40) les métadonnées des paquets de données de la session validée, stockés dans les moyens de mémoire temporaire (108) en fonction de la liste (LM) enregistrée des métadonnées associées (MPID) aux protocoles identifiés (PID) dans la base de données de connaissance (BDDS), et vérifier si les métadonnées associées (MPID) aux protocoles identifiés (PID) sont en accord avec la règle d'identification de métadonnées cibles (MC) du déclencheur (114) ;
en cas d'accord avec la règle d'identification de métadonnées cibles (MC), activer (S50) le déclencheur (114) et attribuer à au moins une empreinte numérique de session (HS) de la session validée un statut de sauvegarde (SV) ; et
mettre en œuvre le vidage (S60) des moyens de mémoire temporaire (108) pour chaque lot de paquets de données dont la ou les empreintes numériques de session (HS) sont dépourvues d'un statut de sauvegarde (SV) ; et
- une mémoire de stockage (116) couplée au processeur (202) apte à enregistrer (508) pour un traitement ultérieur, l'ensemble des paquets de données dont l'empreinte numérique de session (HS) associée est pourvue d'un statut de sauvegarde (SV).

10. Système (102) selon la revendication 9, **caractérisé en ce que** le moteur de surveillance (306) est configuré pour mettre à jour (S51) la table de hash (TH) enregistrée à la suite de l'étape d'enregistrement (S22) d'au moins une empreinte numérique de session (HS), par attribution d'un statut de sauvegarde (SV) à au moins une empreinte numérique de session (HS) en cas d'activation (S50) du déclencheur (114).

11. Système (102) selon la revendication 9 ou 10, **caractérisé en ce que** le moteur de surveillance (306) est configuré pour consulter (S61) la table de hash (TH), et vérifier si la ou les empreintes numériques de session (HS) associées aux paquets de données dont la session est validée, sont pourvues d'un statut de sauvegarde (SV).

12. Système (102) selon l'une des revendications 9 à 11, **caractérisé en ce que** le moteur de surveillance (306) est configuré pour analyser des métadonnées associées au contenu attaché (MP) de la chaîne de protocole de la session validée lors de l'analyse (S40) des métadonnées associées (MPID) aux protocoles identifiés (PID) des paquets de données de la session validée, si au moins une règle d'identification de métadonnées cibles (MC) du déclencheur (114) comprend des métadonnées cibles (MC) en relation avec le contenu attaché.

13. Système (102) selon l'une des revendications 9 à 12, **caractérisé en ce que** les moyens de mémoire temporaire (108) sont vidés progressivement lorsque l'utilisation de la mémoire vive associée est comprise entre 95% à 98%.

14. Système (102) selon la revendication 9 à 13, **caractérisé en ce que** le vidage des moyens de mémoire temporaire (108) est effectué chronologiquement par suppression des paquets de données les plus anciens à un rythme de vidage choisi.

## Patentansprüche

1. Verfahren zur Verarbeitung eines Datenstroms, der
Stapel von Paketen (104) umfasst, wobei die Pakete jeweils durch eine Kette von Kommunikationsprotokollen definiert sind, die mindestens einer Sitzung zugeordnet sind, **dadurch gekennzeichnet, dass** es die folgenden Schritte umfasst:
- Empfangen (SO) einer Vielzahl von Datenpaketstapeln (104) über einen Kommunikationskanal (106) und Speichern dieser Paketstapel (104) in einem Zwischenspeicher (108);
- Durchführen (S10) einer Protokollanalyse (DAPD) bei jeden Datenpaketstapel (104), um die Kommunikationsprotokolle der Protokollkette zu identifizieren, und Validieren (S11) mindestens einer der Protokollkette zugeordneten Sitzung, wenn die Identifikation der Protokollkette vollständig ist;
- Berechnen (S21) mindestens eines digitalen Sitzungs-Fingerabdrucks (HS), der einer identifizierten Protokollkette (PID) zugeordnet ist, deren Sitzung im Validierungsschritt (S11) validiert wird, wobei die Berechnung (S21) des digitalen Fingerabdrucks (HS) auf der Extraktion von Metadaten jedes im Analyseschritt (S10) identifizierten Protokolls und dem Hashing einer jedem Protokolltyp eigenen definierten dynamischen Liste nach einem sogenannten n-Tupel-Ansatz beruht;
- Speichern (S22) des oder der berechneten digitalen Sitzungs-Fingerabdrücke (HS) in mindestens einer Hash-Tabelle (TH) und Sichern einer Liste (LM) von Metadaten, die den identifizierten Protokollen (PID) der Protokollkette der validierten Sitzung zugeordnet sind (MPID), in einer Wissensdatenbank (BDDS);
- Erzeugen (S30) mindestens eines Auslösers (114) auf der Grundlage der Ergebnisse der Protokollanalyse (DAPD), wobei die Aktivierung des Auslösers (114) auf die Übereinstimmung zwischen mindestens einer Regel zur Identifizierung von Zielmetadaten (MC) und den Metadaten hinweist, die den identifizierten Protokollen (PID), deren Liste (LM) in der Wissensdatenbank (BDDS) gespeichert ist, zugeordnet sind (MPID);
- Analysieren (S40) der den identifizierten Protokollen (PID) zugeordneten Metadaten (MPID) der Datenpakete der validierten Sitzung, die in den Zwischenspeichermitteln (108) gespeichert sind, gemäß der in der Wissensdatenbank (BDDS) gespeicherten Liste (LM) der den identifizierten Protokollen (PID) zugeordneten Metadaten (MPID) und Prüfen, ob die den identifizierten Protokollen (PID) zugeordneten Metadaten (MPID) mit der Regel zur Identifizierung von Zielmetadaten (MC) des Auslösers (114) übereinstimmen;
- bei Übereinstimmung mit der Regel zur Identifizierung von Zielmetadaten (MC) Aktivieren (S50) des Auslösers (114) und Zuweisen eines Sicherungsstatus (SV) zu mindestens einem digitalen Sitzungsabdruck (HS) der freigegebenen Sitzung; und
- Leeren (S60) des Zwischenspeichers (108) jedes Stapels von Datenpaketen, deren digitaler Sitzungs-Fingerabdruck keinen Sicherungsstatus (SV) aufweist, und Speichern (S61) der Gesamtheit der Datenpakete, von denen mindestens ein zugeordneter digitaler Sitzungs-Fingerabdruck (HS) einen Sicherungsstatus (SV) aufweist, in einem Speicher (116) für die spätere Verarbeitung.

2. Verfahren nach Anspruch 1, in dem der Schritt der Aktivierung (S50) des Auslösers (114) einen Unterschritt der Aktualisierung (S51) der Hash-Tabelle (TH), die im Anschluss an den Schritt des Speicherns (S22) mindestens eines digitalen Sitzungs-Fingerabdrucks (HS) gespeichert wurde, durch Zuweisung eines Sicherungsstatus (SV) zu mindestens einem digitalen Sitzungsabdruck (HS) umfasst.

3. Verfahren nach Anspruch 1 oder 2, in dem der Schritt des Leerens (S60) des Zwischenspeichers (108) einen Unterschritt der Abfrage (S61) der Hash-Tabelle (TH) umfasst, um zu überprüfen, ob mindestens einer der digitalen Sitzungs-Fingerabdrücke (HS), die den von der Leerung (S60) betroffenen Datenpaketen zugeordnet sind, einen Sicherungsstatus (SV) aufweist.

4. Verfahren nach einem der Ansprüche 1 bis 3, **dadurch gekennzeichnet, dass** der Schritt des Analysierens (S40) der Metadaten, die den identifizierten Protokollen (PID) der Datenpakete der validierten Sitzung zugeordnet sind, einen zusätzlichen Unterschritt der Analyse von Metadaten umfasst, die dem angehängten Inhalt (MP) der Protokollkette der validierten Sitzung zugeordnet sind, wobei dieser durchgeführt wird, wenn mindestens eine Regel zur Identifizierung von Zielmetadaten (MC) des Auslösers (114) Zielmetadaten (MC) umfasst, die sich auf den angehängten Inhalt (MP) beziehen.

5. Verfahren nach einem der Ansprüche 1 bis 4, **dadurch gekennzeichnet, dass** der Auslöser (114) geeignet ist, eine dynamische Liste von Regeln zur Identifizierung von Zielmetadaten (MC) zu verarbeiten und anzuwenden.

6. Verfahren nach einem der Ansprüche 1 bis 5, **dadurch gekennzeichnet, dass** die Zielmetadaten (MC) der Regeln zur Identifizierung des Auslösers (114) zu der Gruppe gehören, die aus nativen Metadaten, d. h. Metadaten, die aus ausgewählten mathematischen Formeln berechnet werden, gebildet wird.

7. Verfahren nach einem der Ansprüche 1 bis 6, in dem die Zielmetadaten (MC) repräsentativ für ausgewählte Netzwerkparameter sind, die zu der Gruppe gehören, die aus Ziel-IP, Quell-IP, Ziel-Port, Quell-Port, Protokoll, IP-Adresse, Port, QoS-Parameter oder Qualitätsparamter des Dienstes, Netzwerk-Tag, Sitzungsvolumen, Paketgröße, Anzahl der Wiederholungen (engl. retry), Version, Typ und Version des Verschlüsselungsalgorithmus, Verschlüsselungstyp, CERT (engl. Computer Emergency Response Team) des Zertifikats, SNI-Wert (Angabe de Servernamens oder engl. Server Name Indication), Paketgröße, zurückgegebene IP, Fehlerflagge (engl. flag error), Domänenname, Clientversion, Serverversion, Version des Verschlüsselungsalgorithmus, Komprimierungsalgorithmus, Zeitstempel, IP-Version, Hostname, Lease-Zeit (engl. Lease-Time), URL, User Agent, Bytezahl des angehängten Inhalts, Inhaltstyp, Statuscode, Cookie-Header, Client-Name, Anfragedienst, Fehlercodewert, Anfragetyp, Protokollwert, Antwortzeitstempel, Berechtigungsstufe, Tastaturtyp und -sprache, Produktidentifikation, Bildschirmgröße oder andere ähnliche spezifische Metadaten, die aus den Protokollen in einem oder mehreren Datenpaketen der validierten Sitzung oder aus dem angehängten Inhalt eines oder mehrerer Pakete der validierten Sitzung extrahiert wurden.

8. Verfahren nach einem der Ansprüche 1 bis 7, in dem die Durchführung des Schritts (S10) der Analyse von Protokollen (DAPD) und die Durchführung des Schritts (S40) der Analyse der Metadaten der Datenpakete der validierten Sitzung (MP ID) auf Datenpaketen der Schichten 2 bis 7 des OSI-Modells erfolgt.

9. System (102) zur Verarbeitung eines Datenstroms, der Stapel von Paketen umfasst, wobei die Pakete jeweils durch eine Kette von Kommunikationsprotokollen definiert sind, die zu mindestens einer Sitzung gehören, **dadurch gekennzeichnet, dass** es
- Netzwerkschnittstellenmittel(NIC) umfasst, die so konfiguriert sind, dass sie einen Datenstrom von einem Kommunikationskanal (106) empfangen;
- einen Prozessor (202) mit mindestens einem Verarbeitungskern (204) zum Verarbeiten einer vorbestimmten Anzahl von Datenpaketen pro Minute (ppm);
- einen Zwischenspeicher (108), der mit dem Prozessor (202) gekoppelt ist und geeignet ist, eine Vielzahl von Datenpaketstapeln (104) aus den Netzwerkschnittstellenmitteln (NIC) zu speichern;
- eine Protokollanalyse-Engine (206), die auf mindestens einem Verarbeitungskern (204) ausführbar ist, wobei die Protokollanalyse-Engine (206) folgende Schritte ausführen kann:
Empfangen (SO) einer Vielzahl von Datenpaketstapeln (104) innerhalb einer vordefinierten Zeit über einen Kommunikationskanal (106);
Durchführen (S10) einer Protokollanalyse (DAPD) für jeden Datenpaketstapel, um die Kommunikationsprotokolle der Protokollkette zu identifizieren, und Validieren mindestens einer zugeordnete Sitzung;
Berechnen (S21) mindestens eines digitalen Sitzungs-Fingerabdrucks (HS), der einer identifizierten Protokollkette (PID) zugeordnet ist, deren Sitzung validiert wurde, wobei die Berechnung (S21) des digitalen Fingerabdrucks (HS) auf der Extraktion von Metadaten jedes im Analyseschritt (S10) identifizierten Protokolls und dem Hashing einer jedem Protokolltyp eigenen dynamischen Liste nach einem sogenannten n-Tupel-Ansatz beruht;
Speichern (S22) des berechneten digitalen Sitzungs-Fingerabdrucks (HS) in mindestens einer Hash-Tabelle (TH) und Sichern einer Liste (LM) von Metadaten, die den identifizierten Protokollen (PID) der Protokollkette der validierten Sitzung zugeordnet sind (MPID), in einer Wissensdatenbank (BDDS);
- eine Überwachungs-Engine (306), die auf mindestens einem Verarbeitungskern (204) ausführbar ist, wobei die Überwachungs-Engine (306) folgende Schritte ausführen kann:
Erzeugen (S30) mindestens eines Auslösers (114) basierend auf den Ergebnissen der Protokollanalyse (DAPD), wobei die Aktivierung des Auslösers (114) auf die Übereinstimmung zwischen mindestens einer Regel zur Identifizierung von Zielmetadaten (MC) mit der Liste (LM) der Metadaten (MPID), die den identifizierten Protokollen (PID) der Protokollkette der validierten Sitzung zugeordnet sind.
Analysieren (S40) der in den Zwischenspeichermitteln (108) gespeicherten Metadaten der Datenpakete der validierten Sitzung gemäß der in der Wissensdatenbank (BDDS) gespeicherten Liste (LM) der den identifizierten Protokollen (PID) zugeordneten Metadaten (MPID), und Prüfen der Übereinstimmung der den identifizierten Protokollen (PID) zugeordneten Metadaten (MPID) mit der Regel zur Identifizierung von Zielmetadaten (MC) des Auslösers (114);
bei Übereinstimmung mit der Regel zur Identifizierung von Zielmetadaten (MC) Aktivieren (S50) des Auslösers (114) und Zuweisen eines Sicherungsstatus (SV) zu mindestens einem digitalen Sitzungs-Fingerabdruck (HS) der validierten Sitzung; und
Leeren (S60) der Zwischenspeichermittel (108) bei jedem Stapel von Datenpaketen, dessen digitale(r) Sitzungs-Fingerabdrück(e) (HS) keinen Sicherungsstatus (SV) aufweisen; und
- einen mit dem Prozessor (202) gekoppelten Speicher (116), der geeignet ist, die Gesamtheit der Datenpakete, deren zugehöriger digitaler Sitzungs-Fingerabdruck (HS) mit einem Sicherungsstatus (SV) versehen ist, für eine spätere Verarbeitung zu speichern (508).

10. System (102) nach Anspruch 9, **dadurch gekennzeichnet,**
**dass** die Überwachungs-Engine (306) so konfiguriert ist, dass sie die im Anschluss an den Schritt des Speicherns (S22) mindestens eines digitalen Sitzungs-Fingerabdrucks (HS) gespeicherte Hash-Tabelle (TH) aktualisiert (S51), indem sie mindestens einem digitalen Sitzungs-Fingerabdruck (HS) im Fall der Aktivierung (S50) des Auslösers (114) einen Sicherungsstatus (SV) zuweist.

11. System (102) nach Anspruch 9 oder 10, **dadurch gekennzeichnet,**
**dass** die Überwachungs-Engine (306) so konfiguriert ist, dass sie die Hash-Tabelle (TH) abfragt (S61) und prüft, ob der oder die digitalen Sitzungs-Fingerabdrücke (HS), die den Datenpaketen mit validierter Sitzung zugeordnet sind, mit einem Sicherungsstatus (SV) versehen sind.

12. System (102) nach einem der Ansprüche 9 bis 11, **dadurch gekennzeichnet, dass** die Überwachungs-Engine (306) so konfiguriert ist, dass sie dem angehängten Inhalt (MP) der Protokollkette der validierten Sitzung zugeordnete Metadaten analysiert, während sie den identifizierten Protokollen (PID) der Datenpakete der validierten Sitzung zugeordnete Metadaten (MPID) analysiert (S40), wenn mindestens eine Regel zur Identifizierung von Zielmetadaten (MC) des Auslösers (114) Zielmetadaten (MC) enthält, die sich auf den angehängten Inhalt beziehen.

13. System (102) nach einem der Ansprüche 9 bis 12, **dadurch gekennzeichnet, dass** die Zwischenspeichermittel (108) nach und nach geleert werden, wenn die Auslastung des zugeordneten Arbeitsspeichers zwischen 95 % und 98 % liegt.

14. System (102) nach Anspruch 9 bis 13, **dadurch gekennzeichnet, dass** das Leeren der Zwischenspeichermittel (108) chronologisch durch Löschen der ältesten Datenpakete in einem gewählten Leerungsrhythmus erfolgt.

## Claims

1. A method of processing a data stream comprising
batches of packets (104) each defined by a chain of communication protocols associated with at least one session, **characterised in that** it comprises the following steps:
- receiving (S0) a plurality of batches of data packets (104) via a communication channel (106) and storing said batches of packets (104) in a temporary memory (108);
- performing (S10), for each batch of data packets (104), a protocol analysis (DAPD) enabling the communication protocols in the protocol chain to be identified, and validating (S11) at least one session associated with the protocol chain when the identification of the protocol chain is complete;
- Calculating (S21) at least one session digital fingerprint (HS) associated with an identified protocol chain (PID) of which the session is validated during the validation step (S11), the calculation (S21) of the digital fingerprint (HS) is based on the extraction of metadata from each protocol identified during the analysis step (S10), and the hashing of a dynamically defined list specific to each type of protocol, according to a so-called n-tuple type approach; and
- storing (S22) said calculated digital session fingerprint(s) (HS) in at least one hash table (TH), and saving a list (LM) of the metadata (MPID) associated with the identified protocols (PID) of the protocol chain of the validated session in a knowledge database (BDDS);
- generating (S30) at least one trigger (114) based on the protocol analysis results (DAPD), wherein activation of the trigger (114) is indicative of a match between at least one rule for identifying target metadata (MC) and the metadata (MPID) associated with the identified protocols (PID), the list (LM) of which is saved in the knowledge database (BDDS);
- analysing (S40) the metadata (MPID) associated with the identified protocols (PID) of the data packets of the validated session, stored in the temporary memory resources (108), against the saved list (LM) of metadata (MPID) associated with the identified protocols (PID) in the knowledge database (BDDS), and checking whether the metadata (MPID) associated with the identified protocols (PID) comply with the trigger's (114) rule for identifying target metadata (MC) ;
- if the data comply with the rule for identifying target metadata (MC), activating (S50) the trigger (114) and assigning a save status (SV) to at least one digital session fingerprint (HS) of the validated session; and
- emptying (S60) the temporary memory (108) of each batch of data packets, the digital session fingerprint of which does not have a save status (SV), and saving (S61) on a storage memory (116) for subsequent processing all the data packets for which at least one associated digital session fingerprint (HS) has a save status (SV).

2. The method according to claim 1, wherein the activation step (S50) of the trigger (114) comprises a sub-step updating (S51) the hash table (TH) saved following the step to save (S22) at least one digital session fingerprint (HS), by assigning a save status (SV) to at least one digital session fingerprint (HS).

3. The method according to claim 1 or 2, wherein the step of emptying (S60) the temporary memory (108) comprises a sub-step consulting (S61) the hash table (TH) to check whether at least one of the digital session fingerprints (HS) associated with the data packets subject to emptying (S60) has a save status (SV).

4. The method according to any of claims 1 to **3, characterised in that** in the step of analysis (S40) of the metadata associated with the identified protocols (PID) of the data packets of the validated session comprises a further sub-step of analysing the metadata associated with the attached content (MP) of the protocol chain of the validated session, implemented if at least one rule for identifying target metadata (MC) of the trigger (114) comprises target metadata (MC) in relation to the attached content (MP).

5. The method according to any of claims 1 to 4, **characterised in that** in the trigger (114) is capable of processing and applying a dynamic list of rules for identifying target metadata (MC).

6. The method according to any of claims 1 to 5, **characterised in that** the target metadata (MC) of the trigger's (114) identification rules belong to the group formed by native metadata and metadata calculated from selected mathematical formulae.

7. The method according to any of claims 1 to 6, wherein the target metadata (MC) are representative of selected network parameters belonging to the group formed by destination IP, source IP, destination port, source port, protocol, IP address, port, QoS quality of service parameters, network tag, session volume, packet size, number of retries, version, encryption algorithm type and version, encryption type, CERT (Computer Emergency Response Team) certificate, SNI (Server Name Indication) value, packet size, returned IP, error flag, domain name, client version, server version, encryption algorithm version, compression algorithm, timestamp, IP version, hostname, lease-time, URL, user agent, number of bytes of content attached, content type, status code, cookie header, client name, request service, error code value, request type, protocol value, response timestamp, privilege level, keyboard type and language, product identification, screen size, or any similar specific metadata extracted from the protocols in one or more data packets of the validated session, similar specific metadata extracted from the content attached to one or more data packets of the validated session.

8. The method according to any of claims 1 to 7, wherein the step (S10) of protocol analysis (DAPD) and the step of analysing (S40) the metadata of the data packets of the validated session (ID) are carried out on the data packets of layer 2 to layer 7 of the OSI model.

9. A system (102) for processing a data stream comprising batches of packets each defined by a chain of communication protocols attached to at least one session, **characterised in that** it comprises
- network interface resources (NIC) configured to receive a data stream from a communication channel (106);
- a processor (202) comprising at least one processing core (204) for processing a predetermined number of data packets per minute (ppm);
- a temporary memory (108), coupled to the processor (202), capable of storing a plurality of batches of data packets (104) from the network interface resources (NIC);
- a protocol analysis engine (206) executable on at least one processing core (204), wherein the protocol analysis engine (206) is capable of:
receiving (S0) a plurality of batches of data packets (104) within a predetermined time via a communication channel (106);
performing (S10), for each batch of data packets, a protocol analysis (DAPD) enabling the communication protocols in the protocol chain to be identified, and validating at least one associated session;
calculate (S21) at least one digital fingerprint (HS) of a session associated with an identified protocol chain (PID) of which the session is validated, the calculation (S21) of the digital footprint (HS) being based of the extraction of metadata from each protocol identified during the analysis step (S10), and the hashing of a dynamically defined list specific to each type of protocol, adopting an n-tuple approach; and
storing (S22) the calculated digital session fingerprint (HS) in at least one hash table (TH), and saving a list (LM) of the metadata (MPID) associated with the identified protocols (PID) of the protocol chain of the validated session in a knowledge database (BDDS);
- a monitoring engine (306) executable on at least one processing core (204), wherein the monitoring engine (306) is capable of:
generating (S30) at least one trigger (114) based on the protocol analysis results (DAPD), wherein activation of the trigger (114) is indicative of a match between at least one rule for identifying target metadata (MC) and the list (LM) of metadata (MPID) associated with the identified protocols (PID) of the protocol chain of the validated session;
analysing (S40) the metadata of the data packets of the validated session, stored in the temporary memory means (108), against the saved list (LM) of metadata (MPID) associated with the identified protocols (PID) in the knowledge database (BDDS), and checking whether the metadata (MPID) associated with the identified protocols (PID) comply with the trigger's (114) rule for identifying target metadata (MC) ;
if the data comply with the rule for identifying target metadata (MC), activating (S50) the trigger (114) and assigning a save status (SV) to at least one digital session fingerprint (HS) of the validated session; and
emptying (S50) the temporary memory means (108) for each batch of data packets, the digital session fingerprint (s) (HS) of which do not have a save status (SV); and
- a storage memory (116) coupled to the processor (202) capable of saving, (508) for subsequent processing, all the data packets, the associated digital session fingerprint (HS) of which has a save status (SV).

10. A system (102) according to claim 9, **characterised in that**
the monitoring engine (306) is configured to update (S51) the hash table (TH) saved following the step of saving (S22) at least one digital session fingerprint (HS), by assigning a save status (SV) to at least one digital session fingerprint (HS) in case of activation (S50) of the trigger (114).

11. A system (102) according to claim 9 or 10, **characterised**
**in that** the monitoring engine (306) is configured to consult (S61) the hash table (TH) and check whether the digital session fingerprints (HS) associated with the data packets, the session of which is validated, have a save status (SV).

12. A system (102) according to any of claims 9 to 11, **characterised in that** the monitoring engine (306) is configured to analyse metadata associated with the attached content (MP) of the protocol chain of the validated session during the analysis (S40) of the metadata (MPID) associated with the identified protocols (PID) of the data packets of the validated session, if at least one rule for identifying target metadata (MC) of the trigger (114) comprises target metadata (MC) in relation to the attached content.

13. A system (102) according to any of claims 9 to 12, **characterised in that** the temporary memory resources (108 ) are gradually emptied when the use of the associated RAM is between 95% and 98%.

14. A system (102) according to claims 9 to 13, **characterised in that** the temporary memory resources (108) are emptied chronologically by deleting the oldest data packets at a chosen emptying rate.
